(19) **Europäisches Patentamt**

**European Patent Office**

**Office européen des brevets**

(11) **EP 4 576 865 A1**

(12) **EUROPEAN PATENT APPLICATION**
published in accordance with Art. 153(4) EPC

(43) Date of publication:
**25.06.2025 Bulletin 2025/26**

(21) Application number: **23856056.9**

(22) Date of filing: **22.03.2023**

(51) International Patent Classification (IPC):
**H04W 24/06** (2009.01)

(52) Cooperative Patent Classification (CPC):
**H04W 16/22; H04W 24/06; H04W 28/10;**
**H04W 72/1263**

(86) International application number:
**PCT/CN2023/083168**

(87) International publication number:
**WO 2024/040960 (29.02.2024 Gazette 2024/09)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **25.08.2022 CN 202211028169**

(71) Applicant: **ZTE CORPORATION**
**Shenzhen, Guangdong 518057 (CN)**

(72) Inventor: **LIU, Xuebin**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **DYNAMIC LOAD PREDICTION METHOD AND APPARATUS, BASE STATION, AND STORAGE MEDIUM**

(57) The present disclosure relates to a dynamic load prediction method and apparatus, a base station and a storage medium. The method comprises: in a plurality of base station cells located on a preset load migration line, determining a cross-layer same-direction group of a target base station cell, and obtaining a real-time load of the target base station cell at a current moment and a historical prediction load corresponding to a previous moment; receiving cross-layer neighbor cell load data transmitted by the same-direction group of a left neighbor cell and the same-direction group of a right neighbor cell of the cross-layer same-direction group of the target base station cell, the corresponding cross-layer neighbor cell load data comprising historical load data and real-time load data; using a preset load prediction model, performing load prediction on the basis of the real-time load, the historical prediction load and the cross-layer neighbor cell load data, so as to obtain a forward prediction load and a reverse prediction load corresponding to the target base station cell, and on the basis of the forward prediction load and the reverse prediction load, determining a corresponding load prediction result.

FIG. 1

**Description**

CROSS-REFERENCE TO RELATED APPLICATIONS

The present disclosure claims priority from Chinese patent application No. CN202211028169.9 titled "DYNAMIC LOAD PREDICTION METHOD AND APPARATUS, BASE STATION, AND STORAGE MEDIUM", filed on August 25, 2022, the entire contents of which are incorporated herein by reference.

TECHNICAL FIELD

The present disclosure relates to the field of base station systems, and particularly relates to a dynamic load prediction method and apparatus, a base station and a storage medium.

BACKGROUND

In the related art, a load of a mobile communication network generally refers to the number of users (number of terminals) accessing a network base station cell, or various resource occupancy rates of the network base station cell. As a data index of great concern in guaranteed operation and maintenance of the mobile communication network, as well as a key index for network real-time monitoring, the load of the network is directly related to stable operation of the network, user awareness and energy conservation, and thereby has become a research hotspot and application focus of the mobile communication network field. In the related art, by means of load prediction, a network base station can be assisted and guided to implement various energy-saving measures and timely wake up, and deploy load balancing and admission control with special guarantee for high traffic special guarantee in advance, thereby ensuring smooth operation of the base station and the user's service awareness.

In the related art, for load prediction, an Auto Regressive Integrated Moving Average (ARIMA) model is commonly used, and subjected to training, learning and regression with historical load data of the network base station cell itself, so as to implement prediction of future loads of each base station cell. Alternatively, a deep neural network model, such as a Recurrent Neural Network (RNN) model or an improved Long Short-term Memory (LSTM) model, may be used for load prediction. However, the conventional prediction methods typically consume a great deal of time and historical data to complete effective training and learning, and to achieve relatively accurate prediction, while the load prediction also requires periodic and regular load changes of the base station cell. In a mobile communication scene of no notable temporal or periodic rule, complex network topology structure and user movement trajectories, or a simple network topology structure with user movement at a high speed and load burst at uncertain time, the related load prediction methods cannot implement accurate and effective load prediction.

No effective solution has been proposed yet for the problem that the load prediction methods in the related art cannot be applied to a high-speed mobile communication scene with high-speed user movement, load burst and no accurate temporal or periodic rule.

SUMMARY

The present disclosure provides a dynamic load prediction method and apparatus, a base station and a storage medium.

In a first aspect, the present disclosure provides a dynamic load prediction method applied to a target base station cell under a high-speed private network, including: determining, in a plurality of base station cells located on a preset load migration line, a cross-layer same-direction group, wherein a base station cell at each end of the cross-layer same-direction group is a primary neighbor cell of a $K^{th}$ layer corresponding to the target base station cell, and K is a preset value; acquiring a real-time load at a current moment and a historical predicted load corresponding to a previous moment, wherein the historical predicted load represents a load migration change of the current moment predicted at the previous moment; receiving cross-layer neighbor cell load data respectively transferred from a left neighbor cell same-direction group and a right neighbor cell same-direction group of the cross-layer same-direction group, wherein the corresponding cross-layer neighbor cell load data includes historical load data and real-time load data, the historical load data represents a predicted load at the previous moment corresponding to K layers of primary neighbor cells of a corresponding neighbor cell same-direction group, and the real-time load data represents an actual load at the current moment of the K layers of primary neighbor cells of the corresponding neighbor cell same-direction group; performing load prediction with a preset load prediction model and based on the real-time load, the historical predicted load and the cross-layer neighbor cell load data, to obtain a forward predicted load and a reverse predicted load corresponding to the target base station cell, and determining a corresponding load prediction result based on the forward predicted load and the reverse predicted load.

In a second aspect, the present disclosure provides a dynamic load prediction apparatus applied to a target base station cell under a high-speed private network, including: a determination module configured to determine, in a plurality of base station cells located on a preset load migration line, a cross-layer same-direction group, wherein a base station cell at each end of the cross-layer same-direction group is a primary neighbor cell of a $K^{th}$ layer corresponding to the target base station cell, and K is a preset value; an acquisition module configured to acquire a real-time load at a current moment and a historical predicted load corresponding to a previous moment, wherein the historical predicted load represents a load migration change of the current moment predicted at the previous moment; a receiving module configured to receive cross-layer neighbor cell load data respectively transferred from a left neighbor cell same-direction group and a right neighbor cell same-direction group of the cross-layer same-direction group, wherein the corresponding cross-layer neighbor cell load data includes historical load data and real-time load data, the historical load data represents a predicted load at the previous moment corresponding to K layers of primary neighbor cells of a corresponding neighbor cell same-direction group, and the real-time load data represents an actual load at the current moment of the K layers of primary neighbor cells of the corresponding neighbor cell same-direction group; and a prediction module configured to perform load prediction with a preset load prediction model and based on the real-time load, the historical predicted load and the cross-layer neighbor cell load data, to obtain a forward predicted load and a reverse predicted load corresponding to the target base station cell, and determine a corresponding load prediction result based on the forward predicted load and the reverse predicted load.

In a third aspect, there is provided a base station, including a processor, a communication interface, a memory, and a communication bus, wherein the processor, the communication interface and the memory are communicated with each other through the communication bus; the memory has a computer program stored thereon; and the processor is configured to, when executing the program stored on the memory, implement the dynamic load prediction method according to the first aspect.

In a fourth aspect, there is provided a computer-readable storage medium storing a computer program thereon, wherein the computer program, when executed by a processor, causes the dynamic load prediction method according to the first aspect to be implemented.

The details of one or more embodiments of the present disclosure are set forth in the accompanying drawings and the description below to make other features, objects and advantages of the present disclosure more concise and understandable.

BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.

To illustrate the technical solutions in the embodiments of the present disclosure or the existing art more clearly, the drawings to be used in the description of the embodiments or the existing art will be briefly described below. Apparently, other drawings may be derived from these drawings by those of ordinary skill in the art without any creative labor.

FIG. 1 is a schematic flowchart of a dynamic load prediction method according to an embodiment of the present disclosure;

FIG. 2 is a schematic structural diagram of a cross-layer same-direction group according to an embodiment of the present disclosure;

FIG. 3 is a block diagram of a dynamic load prediction apparatus according to an embodiment of the present disclosure; and

FIG. 4 is a schematic structural diagram of a base station according to an embodiment of the present disclosure.

DETAIL DESCRIPTION OF EMBODIMENTS

To clarify the objects, technical solutions and advantages of the embodiments of the present disclosure, the technical solutions in the embodiments of the present disclosure will be clearly and completely described below with reference to the accompanying drawings in the embodiments of the present disclosure. Obviously, the described embodiments are some, not all, of the embodiments of the present disclosure. All other embodiments, which can be derived by those of ordinary skill in the art from the embodiments of the present disclosure without making any creative effort, shall fall within the protection scope of the present disclosure.

Prior to the description of the embodiments of the present disclosure, the technical terms involved in the present disclosure are explained below.

Base Station (BS): a basic unit of a mobile network.

Cell: a basic unit of the base station, where under a clover structure of a conventional honeycomb base station, one base station has three sector cells each being 120°, while under a high-speed rail private network, one base station has two or more cells.

UE: User Equipment.

5G: the Fifth-Generation mobile communication.

4G: the Fourth-Generation mobile communication.

NR: New Radio.

LTE: Long Term Evolution.

ARIMA: Auto Regressive Integrated Moving Average, which is an improved time series model based on ARMA.

RNN: Recurrent Neural Network.

LSTM: Long Short-term Memory, which is an improved neural network model based on RNN.

The following will describe the technical solutions of the embodiments of the present disclosure with reference to the drawings in the embodiments of the present disclosure.

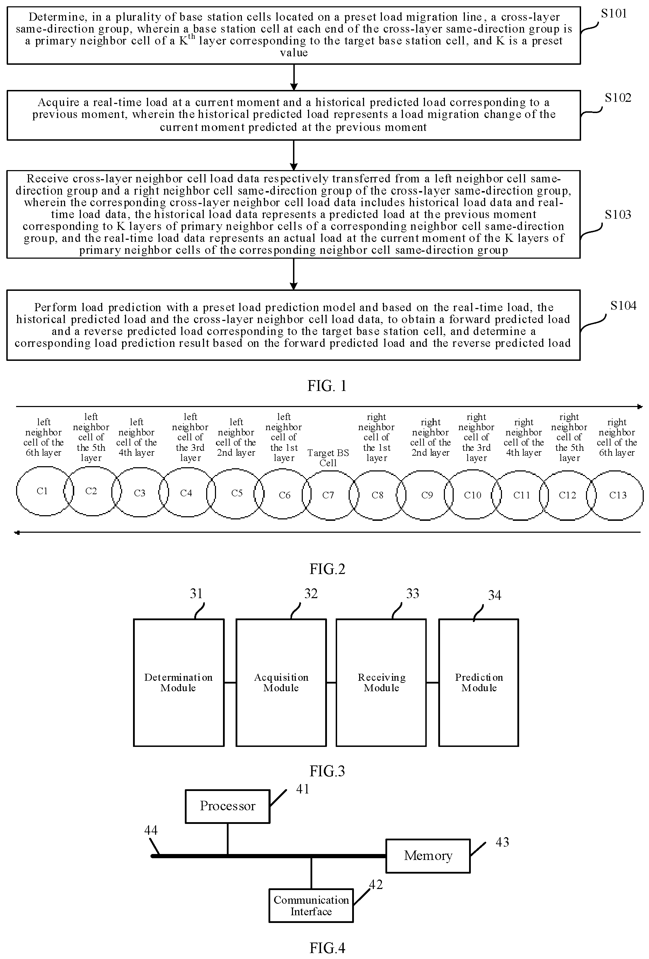

FIG. 1 is a schematic flowchart of a dynamic load prediction method according to an embodiment of the present disclosure. As shown in FIG. 1, an embodiment of the present disclosure provides a dynamic load prediction method applied to a target base station cell under a high-speed private network, the method including the following operations S101 to S104.

At operation S101, determining, in a plurality of base station cells located on a preset load migration line, a cross-layer same-direction group, where a base station cell at each end of the cross-layer same-direction group is a primary neighbor cell of a $K^{th}$ layer corresponding to the target base station cell, and K is a preset value.

In the embodiment of the present disclosure, the dynamic load prediction method involves predicting, by a corresponding base station cell, a load to occur at a next time according to a related load at a current moment and a related load at a previous moment, and obtains, from the load prediction, a possible change, a change trend, and a variation amount of a future load corresponding to the base station cell. In this embodiment, the load prediction does not aim at a predicted load close to an actual load or accurate prediction, but aims at acquiring the future load change trend and variation amount corresponding to the base station cell by considering the predicted load and the actual load in combination, so as to provide effective reference and guidance for energy conservation, load control, traffic guarantee and other operations of the base station cell. In this embodiment, the load prediction is performed on the target base station cell, that is, one of a plurality of base station cells in the load migration direction.

In this embodiment, the high-speed private network considered is a high-speed private network corresponding to a linear high-speed rail line, and therefore, for each of a plurality of base station cells under the high-speed private network, only one corresponding cross-layer same-direction group is needed. A base station cell at a central intersection of a T-shaped or crossed high-speed rail line has two cross-layer same-direction groups, a base station cell at a central intersection of a "Ж" shaped high-speed rail line has three cross-layer same-direction groups, and a base station cell at a central intersection of a "米" shaped high-speed rail line has four cross-layer same-direction groups.

In this embodiment, before determining the cross-layer same-direction group corresponding to the target base station cell, primary neighbor cells are determined for each of a plurality of base station cells $C_i$ (i=1, 2, ......, N) on a segment of the high-speed private network corresponding to the high-speed rail line. In other words, based on statistical data of "neighbor cell pair" switches, primary neighbor cells are screened and determined for each base station cell from left neighbor cells and right neighbor cells corresponding to the base station cell. For example, according to hour granularity statistical data of "neighbor cell pair" switches between the base station $C_i$ and each neighbor cell within a certain time period (for example, 168 hours corresponding to one week), including switches from the base station cell $C_i$ to a neighbor cell and from a neighbor cell to the base station cell $C_i$, neighbor cells of the base station cell $C_i$ are classified into two types by a clustering algorithm, where the type having more switches is the primary neighbor cells of the base station cell $C_i$. Apparently, in some optional implementations, based on the information of network engineering parameters of the base station cell $C_i$ and the neighbor cells, such as installation site, coverage direction and the like, or further referring to the switching statistical data, a network planning and optimization worker may manually screen the nearest neighbor cells on left side and right side of the base station cell $C_i$ along a direction of the high-speed rail line, and set the nearest left and right neighbor cells as the primary neighbor cells of the base station cell $C_i$. Then, the nearest left and right neighbor cells of the base station cell $C_i$ are taken as the corresponding same-direction group of the base station cell $C_i$, and, based on the association between the same-direction groups corresponding to the plurality of base station cells, the cross-layer same-direction group corresponding to each base station cell is determined. For example, if $C_2$ is a right neighbor cell of the same-direction group of $C_1$, and $C_3$ is a right neighbor cell of the same-direction group of $C_2$, then it may be associated and determined that $C_3$ is a right neighbor cell of $C_1$ crossing one layer, so on and so forth, thereby obtaining $C_K$, a right neighbor cell of $C_1$ crossing K layers. Therefore, $\{C_1, C_2, ..., C_K\}$ form a cross-layer same-direction group of $C_1$ crossing K layers.

In the embodiment of the present disclosure, the determined cross-layer same-direction group corresponding to the target base station cell includes a left cross-layer same-direction group and a right cross-layer same-direction group, for example, a left neighbor cell same-direction group and a right neighbor cell same-direction group, where each of the left neighbor cell same-direction group and the right neighbor cell same-direction group has K layers of primary neighbor cells, and K is a preset value. For example, if it is expected to predict a future possible load of the target base station cell $C_i$ earlier and sense a load at a further distance, K may be set to a large value, but this may cause higher overhead and difficulty in load information transfer across layers, as well as increased random uncertainty. Therefore, setting of the K value should consider both target requirements of load prediction and the overhead cost, and the like. For example, $K \leq 9$.

At operation S102, acquiring a real-time load at a current moment and a historical predicted load corresponding to a previous moment, where the historical predicted load represents a load migration change of the current moment predicted at the previous moment.

In the embodiments of the present disclosure, to predict a load at a next moment, two aspects, the current moment and the previous moment, need to be considered in view of the time dimension, where the previous moment, the current moment and the next moment are spaced by a set time period T which is determined according to the typical average coverage distance of a base station cell under a high-speed rail private network and an average speed of a high-speed train. T may take a value ranging from 10 to 60 seconds, and optionally, T=30 seconds. In view of the load information dimension, two aspects, i.e., a real-time (or actual) load and a predicted load, need to be considered, where the predicted load refers to a load of the current moment predicted at the previous moment. In view of the base station cell object dimension, the base station cells participating in the load prediction include two aspects, i.e., the target base station cell and the cross-layer same-direction group.

In this embodiment, the load corresponding to the target base station cell includes the real-time load at the current moment and the predicted load corresponding to the previous moment, and since the predicted load is prediction of a possible load change of the base station cell in the future, a difference between the real-time load at the current moment and the predicted load can be determined from the predicted load corresponding to the previous moment, so as to represent whether a load change trend of the target base station cell is matched with the predicted change trend.

It should be noted that when the time dimension is considered, the time period T should be set in consideration of a time situation, For example, a too small T may cause too high overhead in load prediction and load information transmission, while a too large T may cause the high-speed train to go beyond the target base station cell and some related primary neighbor cells thereof, making is impossible to sample the actual loads of the corresponding base station cells or perform effective load prediction of the target base station cell. When the real-time load is considered, for the real-time load of each base station cell at the current moment, the real-time load reversely migrated into the base station cell from a forward base station cell in the load migration direction should be considered. Therefore, the real-time load of the base station cell is obtained by subtracting a load migrated from the corresponding base station cell at the previous moment from the detected real-time load. In this manner, the real-time load at the current moment is matched with the load migration condition.

At operation S103, receiving cross-layer neighbor cell load data respectively transferred from a left neighbor cell same-direction group and a right neighbor cell same-direction group of the cross-layer same-direction group, where the corresponding cross-layer neighbor cell load data includes historical load data and real-time load data, the historical load data represents a predicted load at the previous moment corresponding to K layers of primary neighbor cells of a corresponding neighbor cell same-direction group, and the real-time load data represents an actual load at the current moment of the K layers of primary neighbor cells of the corresponding neighbor cell same-direction group.

In this embodiment, when the target base station cell $C_i$ is located at a first or last segment of the high-speed private network, the cross-layer same-direction group corresponding to the target base station cell $C_i$ includes only one of the left neighbor cell same-direction group or the right neighbor cell same-direction group. In this case, only forward load prediction or reverse load prediction is performed on the target base station cell $C_i$.

At operation S104, performing load prediction with a preset load prediction model and based on the real-time load, the historical predicted load and the cross-layer neighbor cell load data, to obtain a forward predicted load and a reverse predicted load corresponding to the target base station cell, and determining a corresponding load prediction result based on the forward predicted load and the reverse predicted load.

In the embodiments of the present disclosure, by setting corresponding operation functions, the preset load prediction model respectively performs forward load prediction and reverse load prediction based on the real-time load, the historical predicted load and the cross-layer neighbor cell load data corresponding to the target base station cell with the operation functions, calculates a total predicted load based on the obtained corresponding forward predicted load and reverse predicted load, and then determines a corresponding prediction result according to the total predicted load.

According to the above operations S101 to S104, by determining, in a plurality of base station cells located on a preset load migration line, a cross-layer same-direction group, where a base station cell at each end of the cross-layer same-direction group is a primary neighbor cell of a $K^{th}$ layer corresponding to the target base station cell, and K is a preset value; acquiring a real-time load at a current moment and a historical predicted load corresponding to a previous moment, where the historical predicted load represents a load migration change of the current moment predicted at the previous moment; receiving cross-layer neighbor cell load data respectively transferred from a left neighbor cell same-direction group and a right neighbor cell same-direction group of the cross-layer same-direction group, where the corresponding cross-layer neighbor cell load data includes historical load data and real-time load data, the historical load data represents a predicted load at the previous moment corresponding to K layers of primary neighbor cells of a corresponding neighbor cell same-direction group, and the real-time load data represents an actual load at the current moment of the K layers of primary neighbor cells of the corresponding neighbor cell same-direction group; and performing load prediction with a preset load prediction model and based on the real-time load, the historical predicted load and the cross-layer neighbor cell load data, to obtain a forward predicted load and a reverse predicted load corresponding to the target base station cell, and determining a corresponding load prediction result based on the forward predicted load and the reverse predicted load, the problem that the load prediction methods in the related art cannot be applied to a high-speed mobile communication scene with high-speed user movement, load burst and no accurate temporal or periodic rule is solved, and the following beneficial effects are achieved: the base station cell can detect and sense the user load and change trend of a farther neighbor cell in advance at a precise time point; and, by combining the predicted load and the actual load of the base station cell, effective reference and guidance can be provided for energy conservation, load control, traffic guarantee and other operations of the base station cell.

In some embodiments, performing load prediction with the preset load prediction model and based on the real-time load, the historical predicted load and the cross-layer neighbor cell load data, to obtain the forward predicted load and the reverse predicted load corresponding to the target base station cell (i.e., operation S104) is implemented by the following operations 21 to 22.

At operation 21, performing, by the load prediction model, forward load calculation on the real-time load, the historical predicted load and the historical load data and real-time load data corresponding to the left neighbor cell same-direction group, to obtain the forward predicted load.

In this embodiment, on a corresponding load migration line, a direction from left to right is defined as a forward direction, and a direction from right to left is defined as a reverse direction. Meanwhile, in the forward load calculation, a load transmitted to the target base station cell from a primary neighbor cell of a first layer in the right neighbor cell same-direction group at the previous moment is also considered to determine an accurate real-time load of the target base station cell, so that the predicted load is closer to the load change trend, that is, can better reflect the change trend of the target base station cell.

At operation 22, performing, by the load prediction model, reverse load calculation on the real-time load, the historical predicted load and the historical load data and real-time load data corresponding to the right neighbor cell same-direction group, to obtain the reverse predicted load.

In this embodiment, in the reverse load calculation, a load transmitted to the target base station cell from a primary neighbor cell of a first layer in the left neighbor cell same-direction group at the previous moment is also considered to determine an accurate real-time load of the target base station cell, so that the predicted load is closer to the load change trend, that is, can better reflect the change trend of the target base station cell.

To acquire the accurate real-time load of each base station cell, in some embodiments, the following operations 31 to 34 are further performed.

At operation 31, acquiring a first actual load of each base station cell on the preset load migration line at the current moment.

In this embodiment, the first actual load includes a part of load migrated to the target base station cell at the previous moment, and a part of load corresponding to the load prediction. To make the load prediction more matched with the expected load prediction and make the predicted load change trend more accurate, in this embodiment, the corresponding prediction is performed after excluding the part of load migrated to the target base station cell at the previous moment.

At operation 32, determining a nearest left neighbor cell and a nearest right neighbor cell corresponding to each base station cell, and respectively acquiring actual loads of the nearest right neighbor cell and the nearest left neighbor cell corresponding to the base station cell at the previous moment, where by defining a direction from a left end to a right end of the preset load migration line as a forward direction, the nearest left neighbor cell represents a first base station cell on a left side of a corresponding base station cell in the forward direction, and the nearest right neighbor cell represents a first base station cell on a right side of a corresponding base station cell in the forward direction.

In this embodiment, the nearest left neighbor cell is a first base station cell on a left side of (i.e., behind) a corresponding base station cell in the forward direction, the nearest right neighbor cell is a first base station cell on a right side of (i.e., before) a corresponding base station cell in the forward direction. The nearest left neighbor cell receives the reverse migration load of the base station cell, and the nearest right neighbor cell receives the forward migration load of the base station cell.

At operation 33, determining, based on the actual load of the nearest right neighbor cell at the previous moment, a first migration load of the nearest right neighbor cell which is migrated to the base station cell according to a first preset proportion at the previous moment, and determining, based on the actual load of the nearest left neighbor cell at the previous moment, a second migration load of the nearest left neighbor cell which is migrated to the base station cell according to a second preset proportion at the previous moment.

At operation 34, determining, according to a difference between the first actual load and the first migration load, the real-time load corresponding to the base station cell under forward prediction at the current moment, and determining, according to a difference between the first actual load and the second migration load, the real-time load corresponding to the base station cell under reverse prediction at the current moment.

In this embodiment, the actual load corresponding to the forward or reverse prediction of the base station cell at the current moment is determined based on a difference between the first actual load and the first or second migration load, so that according to the loads at the current moment determined in this manner, the predicted load obtained by the load prediction operation can better reflect the load change trend of the base station cell. For example, an arrival moment of a corresponding load of a corresponding base station cell can be predicted more accurately.

According to the above operations, by acquiring a first actual load of each base station cell on the preset load migration line at the current moment; determining a nearest left neighbor cell and a nearest right neighbor cell corresponding to each base station cell, and respectively acquiring actual loads of the nearest right neighbor cell and the nearest left neighbor cell corresponding to the base station cell at the previous moment; determining, based on the actual load of the nearest right neighbor cell at the previous moment, a first migration load of the nearest right neighbor cell which is migrated to the base station cell according to a first preset proportion at the previous moment, and determining, based on the actual load of the nearest left neighbor cell at the previous moment, a second migration load of the nearest left neighbor cell which is migrated to the base station cell according to a second preset proportion at the previous moment; and determining, according to a difference between the first actual load and the first migration load, the real-time load corresponding to the base station cell under forward prediction at the current moment, and determining, according to a difference between the first actual load and the second migration load, the real-time load corresponding to the base station cell under reverse prediction at the current moment, the accurate real-time load of each base station cell can be acquired, and effective reference and guidance can be further provided for energy conservation, load control, traffic guarantee and other operations of the base station cell.

In some embodiments, the load prediction model includes a forward predicted load calculation equation $\hat{L}^i_{p\rightarrow}(m)$ and a reverse predicted load calculation equation $\hat{L}^i_{p\leftarrow}(m)$:

$$\hat{L}^i_{p\rightarrow}(m) = \alpha * \left\{ \beta * [L^i(m) - \gamma * L^{i+1}_{p\leftarrow}(m-1)] + (1-\beta) * \hat{L}^i_{p\rightarrow}(m-1) \right\} + (1-\alpha)$$
$$* \left\{ \sum_{j=i+1}^{i+K} \left[ \beta^{j-i} * \left( L^j_{p\rightarrow}(m) - \gamma * L^{j+1}_{p\leftarrow}(m-1) \right) \right] + \sum_{j=i+1}^{i+K} \left[ (1-\beta)^{j-i} * \hat{L}^j_{p\rightarrow}(m-1) \right] \right\}$$

$$\hat{L}^i_{p\leftarrow}(m) = \alpha * \left\{ \beta * [L^i(m) - (1-\gamma) * L^{i+1}_{p\rightarrow}(m-1)] + (1-\beta) * \hat{L}^i_{p\leftarrow}(m-1) \right\} + (1-\alpha)$$
$$* \left\{ \sum_{j=i+1}^{i+K} \left[ \beta^{j-i} * \left( L^j_{p\leftarrow}(m) - (1-\gamma) * L^{j+1}_{p\rightarrow}(m-1) \right) \right] + \sum_{j=i+1}^{i+K} \left[ (1-\beta)^{j-i} * \hat{L}^j_{p\leftarrow}(m-1) \right] \right\}$$

where m represents the current moment, m-1 represents the previous moment, $\rightarrow$ represents the forward direction, $\leftarrow$ represents a reverse direction, K represents the number of layers of the cross-layer same-direction group, p is a serial number of one of P cross-layer same-direction groups corresponding to the target base station cell $C_i$, $L^i(m)$ is an actual load of the target base station cell $C_i$ at the current moment, $\hat{L}^i_{p\rightarrow}(m)$ and $\hat{L}^i_{p\rightarrow(m-1)}$ represents forward predicted loads of the target base station cell $C_i$ at the current moment and at the previous moment, respectively, $L^{i+1}_{p\leftarrow}(m-1)$ is an actual load of a primary neighbor cell $C^{i+1}_{p\leftarrow}$ of a first layer in the right neighbor cell same-direction group corresponding to the target base station cell $C_i$ at the previous moment, $\gamma$ is the first preset proportion, $L^j_{p\rightarrow}(m)$ is an actual load of a primary neighbor cell $C^j_{p\rightarrow}$ of an (j-i)th layer in the left neighbor cell same-direction group at the current moment, $L^{j+1}_{p\leftarrow}(m-1)$ is an actual load of the nearest right neighbor cell $C^{j+1}_{p\leftarrow}$ corresponding to the primary neighbor cell $C^j_{p\rightarrow}$ of the (j-i)th layer in the left neighbor cell same-direction group at the previous moment, $\hat{L}^j_{p\rightarrow}(m-1)$ is a forward predicted load of the primary neighbor cell $C^j_{p\rightarrow}$ of the (j-i)th layer in the left neighbor cell same-direction group at the previous moment,

$\hat{L}^i_{p\leftarrow}(m)$ and $\hat{L}^i_{p\leftarrow}(m-1)$ represents reverse predicted loads of the target base station cell $C_i$ at the current moment and at the previous moment, respectively, $L^{i+1}_{p\rightarrow}(m-1)$ is an actual load of a primary neighbor cell $C^{i+1}_{p\rightarrow}$ of a first layer in the left neighbor cell same-direction group corresponding to the target base station cell $C_i$ at the previous moment, $L^j_{p\leftarrow}(m)$ is an actual load of a primary neighbor cell $C^j_{p\leftarrow}$ of an (j-i)$^{th}$ layer in the right neighbor cell same-direction group at the current moment, $L^{j+1}_{p\rightarrow}(m-1)$ is an actual load the nearest left neighbor cell $C^{j+1}_{p\rightarrow}$ corresponding to the primary neighbor cell $C^j_{p\leftarrow}$ of the (j-i)$^{th}$ layer in the right neighbor cell same-direction group at the previous moment,

$\hat{L}^j_{p\leftarrow}(m-1)$ is a reverse predicted load of the primary neighbor cell $C^j_{p\leftarrow}$ of the (j-i)$^{th}$ layer in the right neighbor cell same-direction group at the previous moment; $\alpha$, $\beta$ and $\gamma$ are weight factors between [0, 1], $\alpha$ is a weight of a load of the target base station cell $C_i$ itself, (1 - $\alpha$) is a weight of a load corresponding to a neighbor cell same-direction group, $\beta$ is a weight of a real-time load of each base station cell, (1 - $\beta$) is a weight of a predicted load of each base station cell, $\gamma$ is the first preset proportion, and $\gamma$ is a load ratio of the load migrated to a corresponding base station cell from the nearest right neighbor cell at the current moment to the actual load of the nearest right neighbor cell at the previous moment in forward load prediction, and (1 - $\gamma$) is the second preset proportion, and (1 - $\gamma$) is a load ratio of the load migrated to a corresponding base station cell from the nearest left neighbor cell at the current moment to the actual load of the nearest left neighbor cell at the previous moment in reverse load prediction.

In this embodiment, the base station cell is a base station cell of a linear high-speed rail network, and the number of cross-layer same-direction group P=1. In this embodiment, each of $\alpha$, $\beta$ and $\gamma$ is defaulted to 0.5.

In this embodiment, the forward load prediction direction and reverse load prediction direction are denoted by "$\rightarrow$" and "$\leftarrow$", respectively. Therefore, serial numbers of the primary neighbor cells in the left and right neighbor cell same-direction groups on which forward load prediction and reverse load prediction are respectively performed are also directional, and the serial numbers of the neighbor cells in the data are used to explain that the primary neighbor cells in the cross-layer same-direction group are incremented from the primary neighbor cell of the first layer to the primary neighbor cell of the K$^{th}$ layer in the load prediction. For example, when j=i+2, $C^j_{p\rightarrow}$ indicates a primary neighbor cell of the second layer in the left neighbor cell same-direction group corresponding to the target base station cell $C_i$. For another example, when j=i+K, $C^j_{p\leftarrow}$ represents a primary neighbor cell of the K$^{th}$ layer in the right neighbor cell same-direction group corresponding to the target base station cell $C_i$, where j only indicates the serial number of the corresponding base station cell, and does not represent a magnitude of the parameters participating in predicted load calculations.

It should be noted that a time interval between the current moment and the previous moment is the period T of load prediction and load information transmission, where T is determined according to a typical average coverage distance of a base station cell under a high-speed rail private network and an average speed of a high-speed train, and may take a value approximately ranging from 10 to 60 seconds, and optionally, T=30 seconds. It should be noted that a too small T may cause too high overhead in load prediction and load information transmission, while a too large T may cause the high-speed train to go beyond the target base station cell and some related primary neighbor cells thereof, making is impossible to sample the real-time loads of the corresponding base station cells or perform effective load prediction of the target base station cell.

It should be further noted that, under a condition that T is set to match the coverage distance of the base station cell and the speed of the high-speed train, larger values of $\alpha$ and $\beta$, i.e., higher load weight and actual load weight of the target base station cell itself, may lead to more accurate predicted load, but a shorter load detection distance, which is unfavorable to sensing a farther load or predicting the arrival of load earlier. In contrast, smaller values of $\alpha$ and $\beta$, i.e., lower load weight and actual load weight of the target base station cell itself, may lead to a longer load detection distance, but a less accurate predicted load. In the embodiments of the present disclosure, the main purpose of the load prediction is not to obtain a predicted load as close to the actual load as possible, or achieve a core objective of improving the prediction accuracy, but to consider the predicted load and the actual load comprehensively to provide effective reference and guidance for energy conservation, load control, traffic guarantee and other operations of the base station cell.

In some embodiments, determining the corresponding load prediction result based on the forward predicted load and the reverse predicted load (i.e., operation S104) is implemented by the following operations 41 to 42.

At operation 41, summing the forward predicted load and the reverse predicted load to obtain a first predicted total load corresponding to the target base station on the preset load migration line.

In this embodiment, the first predicted total load is calculated by:

$$\hat{L}_p^i(m) = \hat{L}_{p\rightarrow}^i(m) + \hat{L}_{p\leftarrow}^i(m)$$

where p is a serial number of one of P cross-layer same-direction groups corresponding to the target base station cell, $\hat{L}_p^i(m)$ represents the first predicted total load, $\hat{L}_{p\rightarrow}^i(m)$ represents the forward predicted load, and $\hat{L}_{p\leftarrow}^i(m)$ represents the reverse predicted load.

At operation 42, accumulating first predicted total loads corresponding to a plurality of preset load migration lines to generate a total predicted load, where the load prediction result includes the total predicted load.

In this embodiment, the total predicted load $\hat{L}^i(m)$ is calculated by:

$$\hat{L}^i(m) = \sum_{p=1}^{P} \hat{L}_p^i(m)$$

where p is a serial number of one of P cross-layer same-direction groups corresponding to the target base station cell, $\hat{L}^i(m)$ is the total predicted load, and $\hat{L}_p^i(m)$ represents the first predicted total load.

In this embodiment, for a linear high-speed rail network, the total predicted load is equal to the first predicted total load, and for a cross-shaped or "米" shaped high-speed rail network, the total predicted load corresponding to the target base station cell at an intersection of a plurality of load migration lines is a sum of multiple first predicted total loads.

According to the above operations, by summing the forward predicted load and the reverse predicted load to obtain a first predicted total load corresponding to the target base station on the preset load migration line; and accumulating first predicted total loads corresponding to a plurality of preset load migration lines to generate a total predicted load, where the load prediction result includes the total predicted load, summation of total loads at the next moment of the target base station cell predicted at the current moment is performed.

In some embodiments, after determining the corresponding load prediction result, the following operations 51 to 53 are further performed.

At operation 51, respectively acquiring the total predicted load corresponding to the current moment and an actual load corresponding to the current moment, and respectively acquiring a historical total predicted load corresponding to the previous moment and a historical actual load corresponding to the previous moment.

In this embodiment, the forward predicted load and the reverse predicted load are collected, and the total predicted loads corresponding to a plurality of load migration lines are summed, thereby obtaining a predicted load corresponding to the target base station cell at the current moment.

At operation 52, generating a difference variation function of load prediction based on at least two of the actual load corresponding to the current moment, the total predicted load corresponding to the current moment, the historical total predicted load corresponding to the previous moment and the historical actual load corresponding to the previous moment, and determining a calculated value of the difference variation function, where the difference variation function represents prediction performance of load prediction.

In this embodiment, expressions of different load prediction sensitivity parameters are determined by a preset calculation function for optimizing parameters of the load prediction model. For example, a difference between the actual load corresponding to the current moment and the total predicted load corresponding to the current moment may be used as the difference variation function.

In this embodiment, generating the difference variation function of load prediction means defining a preset difference variation function with at least two of the actual load corresponding to the current moment, the total predicted load corresponding to the current moment, the historical total predicted load corresponding to the previous moment and the historical actual load corresponding to the previous moment as the corresponding parameters; while determining the calculated value of the difference variation function means substituting the above four parameters into the corresponding difference variation function defined to obtain a function value used as the corresponding calculated value.

At operation 53, judging whether the calculated value of the difference variation function is greater than a preset threshold, and adjusting weight factors corresponding to the load prediction model according to a judgment result, where the weight factors corresponding to the load prediction model includes the weight $\alpha$ of the load of the target base station cell $C_i$ itself, the weight $\beta$ of the actual load of each base station cell, and the first preset proportion $\gamma$.

In this embodiment, by judging whether the calculated value of the difference variation function is greater than a preset threshold (i.e., a corresponding threshold), it is determined whether the load prediction model is sensitive to prediction of the load. When the value of the difference variation function is positive and greater than the preset threshold (a set upper threshold), it indicates that the prediction is fast and sensitive, and $\alpha$ and $\beta$ are increased by a preset step to reduce the weights of loads of the neighbor cells and the predicted load. In contrast, when the value of the difference variation function is negative and less than the preset threshold (a set lower threshold), it indicates that the prediction is slow and insensitive, and $\alpha$ and $\beta$ are reduced by a preset step to increase the weights of loads of the neighbor cells and the predicted load. In this embodiment, a default value of the preset step is 0.05.

According to the above operations, by respectively acquiring the total predicted load corresponding to the current moment and an actual load corresponding to the current moment, and respectively acquiring a historical total predicted load corresponding to the previous moment and a historical actual load corresponding to the previous moment; generating a difference variation function of load prediction based on at least two of the actual load corresponding to the current moment, the total predicted load corresponding to the current moment, the historical total predicted load corresponding to the previous moment and the historical actual load corresponding to the previous moment, and determining a calculated value of the difference variation function, where the difference variation function represents prediction performance of load prediction; and judging whether the calculated value of the difference variation function is greater than a preset threshold, and adjusting weight factors corresponding to the load prediction model according to a judgment result, model parameters of the load prediction model can be adjusted in real time according to the prediction result, so that both the accuracy of load prediction and the extended detection and sensing distance of the load prediction are taken into consideration.

In some optional implementations, the difference variation function includes one of: a difference between the actual load corresponding to the current moment and the historical total predicted load corresponding to the previous moment; a ratio of the difference between the actual load corresponding to the current moment and the historical total predicted load corresponding to the previous moment to the actual load corresponding to the current moment; a difference between the historical total predicted load corresponding to the previous moment and the total predicted load corresponding to the current moment; a difference between the actual load corresponding to the current moment and the historical actual load corresponding to the previous moment; or a load difference generated by weighting the difference between the total predicted load corresponding to the current moment and the historical total predicted load corresponding to the previous moment, and weighting the difference between the actual load corresponding to the current moment and the historical actual load corresponding to the previous moment.

In this embodiment, each base station cell supports optimization of the corresponding weight factors after determining the load prediction result, that is, supports maintenance, optimization and adjustment of model parameters of the load prediction model to form an individualized dynamic load prediction model adapted to itself. In some optional implementations, optimization of the corresponding model parameters is performed in the following modes, that is, the difference variation function is defined and generated in the following modes.

First mode: the difference variation function dif (m) is defined by:

$$\mathrm{dif}\left(\mathrm{m}\right)=\hat{\mathrm{L}}^{\mathrm{i}}\left(\mathrm{m}-1\right)-\mathrm{L}^{\mathrm{i}}\left(\mathrm{m}\right)$$

or the difference variation function dif (m) is defined by:

$$\mathrm{dif}\left(\mathrm{m}\right)=\frac{\hat{\mathrm{L}}^{\mathrm{i}}\left(\mathrm{m}-1\right)-\mathrm{L}^{\mathrm{i}}\left(\mathrm{m}\right)}{\mathrm{L}^{\mathrm{i}}\left(\mathrm{m}\right)}$$

where $L^i(m)$ is the actual load of the target base station cell $C_i$ corresponding to the current moment, and $\hat{L}^i(m-1)$ is the historical total predicted load corresponding to the previous moment.

Second mode: the difference variation function dif(m) is defined by:

$$\mathrm{dif}\left(\mathrm{m}\right)=\hat{\mathrm{L}}^{\mathrm{i}}\left(\mathrm{m}\right)-\hat{\mathrm{L}}^{\mathrm{i}}\left(\mathrm{m}-1\right)$$

where $\hat{L}^i(m)$ represents the total predicted load corresponding to the current moment, and $\hat{L}^i(m-1)$ represents the historical total predicted load corresponding to the previous moment; or the difference variation function dif(m) is defined by:

$$\mathrm{dif}\left(\mathrm{m}\right)=\mathrm{L}^{\mathrm{i}}\left(\mathrm{m}\right)-\mathrm{L}^{\mathrm{i}}\left(\mathrm{m}-1\right)$$

where $L^i(m)$ is the actual load corresponding to the current moment, and $L^i(m-1)$ represents the historical actual load corresponding to the previous moment; or the difference variation function dif(m) is further defined by:

$$\mathrm{dif}\left(\mathrm{m}\right)=\mu*\left[\hat{\mathrm{L}}^{\mathrm{i}}\left(\mathrm{m}\right)-\hat{\mathrm{L}}^{\mathrm{i}}\left(\mathrm{m}-1\right)\right]+\left(1-\mu\right)*\left[\mathrm{L}^{\mathrm{i}}\left(\mathrm{m}\right)-\mathrm{L}^{\mathrm{i}}\left(\mathrm{m}-1\right)\right]$$

where $\hat{L}^i(m)$ represents the total predicted load corresponding to the current moment, $\hat{L}^i(m-1)$ represents the historical total predicted load corresponding to the previous moment, $L^i(m)$ is the actual load corresponding to the current moment, $L^i(m-1)$ represents the historical actual load corresponding to the previous moment, and $\mu$ is a weight of the predicted load at the current moment and the previous moment, where $\mu$ takes a value in the range of [0, 1], and has a default value 0.5.

In the second mode, the model parameters are adjusted in real time according to changes in the actual load and the predicted load, while both the prediction accuracy and the extended detection and sensing distance are considered. Further, when it is learned that the predicted load is increased, i.e., the train load is approaching, $\alpha$ and $\beta$ are increased by a preset step so that the focus is on the load and the actual load of the target base station cell itself to improve the prediction accuracy. When the predicted load is decreased, i.e., the train load is moving away, $\alpha$ and $\beta$ are reduced by the preset step so that the focus is on the loads of the neighbor cells and the predicted load to expand a detection and sensing distance of the loads of the neighbor cells of the base station.

Third mode: calculating a gravity center of total load CoL(m, p) of a preset high-speed private network segment by:

$$\mathrm{CoL}\left(\mathrm{m,\ p}\right)=\frac{\sum_{j=i-K}^{i+K}\left[\left(j-i\right)*L_p^j\left(m\right)\right]}{\sum_{j=i-K}^{i+K}\left[L_p^j\left(m\right)\right]}$$

where the high-speed private network segment consists of the target base station cell $C_i$ and 2K layers of primary neighbor cells of the same-direction group crossing K layers corresponding to the target base station cell $C_i$, CoL(m, p) represents the gravity center of total load of the high-speed private network segment corresponding to the target base station cell $C_i$ at a moment m, $L_p^j(m)$ represents an actual load of each base station cell $C_j$ in the high-speed private network segment at the moment m, and p is a serial number of one of P cross-layer same-direction groups corresponding to the target base station cell $C_i$; and then taking the gravity center of total load as the difference variation function.

In this embodiment, for each base station cell, the gravity center of total load of the high-speed private network segment is determined from the actual load of the base station cell itself and the actual load of each base station neighbor cell in the cros s-layer same-direction group crossing K layers, and then, based on changes in position of the gravity center of total load, a moving direction of the train on the high-speed rail line corresponding to the high-speed private network and a caused load moving direction are determined. When it is determined that the gravity center of total load of the high-speed private network segment is in forward movement from left to right, $\gamma$ is reduced by the preset step; otherwise, $\gamma$ is increased. In this embodiment, the preset step may be 0.05, and $\gamma$ should not exceed a preset value.

In some embodiments, receiving cross-layer neighbor cell load data respectively transferred from the left neighbor cell same-direction group and the right neighbor cell same-direction group of the cross-layer same-direction group (i.e., operation S103) is implemented by the following operations 61 to 62.

At operation 61, after the nearest left neighbor cell detects first target load data from received first neighbor cell group load data, synthesizing, by the nearest left neighbor cell, the first target load data, the actual load of the nearest left neighbor cell at the current moment, and the historical predicted load of the nearest left neighbor cell at the previous moment into first cross-layer neighbor cell load data according to a preset format, and transferring, by the nearest left neighbor cell, the first cross-layer neighbor cell load data to the corresponding target base station cell, where the first neighbor cell group load data includes cross-layer neighbor cell load data corresponding to a left neighbor cell same-direction group of the nearest left neighbor cell, and the first target load data includes cross-layer neighbor cell load data corresponding to all primary neighbor cells excluding the primary neighbor cell of the $K^{th}$ layer in the left neighbor cell same-direction group of the nearest left neighbor cell.

In some optional implementations, the target base station cell is set to $C_8$, the left neighbor cell same-direction group corresponding to the target base station cell $C_8$ is set to $\{C_2, C_3, C_4, C_5, C_6, C_7\}$, where the nearest left neighbor cell corresponding to the target base station cell $C_8$ is $C_7$, and the target base station cell $C_8$ receives cross-layer neighbor cell load data transferred from the left neighbor cell same-direction group by the following processes: the nearest left neighbor cell $C_7$ receives cross-layer neighbor cell load data $M_0=\{L(1), L(2), L(3), L(4), L(5), L(6)\}$ from its own left neighbor cell same-direction group $\{C_1, C_2, C_3, C_4, C_5, C_6\}$; after deleting the load $L(1)$ corresponding to the primary neighbor cell $C_1$ of the $K^{th}$ layer in its left neighbor cell same-direction group from $M_0$, the nearest left neighbor cell $C_7$ adds its own load $L(7)$ to be transferred to the target base station cell $C_8$ at the current moment to form the corresponding first cross-layer neighbor cell load data, that is, $M_1=\{L(2), L(3), L(4), L(5), L(6), L(7)\}$, which is then transferred to the target base station cell $C_8$.

At operation 62, after the nearest right neighbor cell detects second target load data from received second neighbor cell group load data, synthesizing, by the nearest right neighbor cell, the second target load data, the actual load of the nearest right neighbor cell at the current moment, and the historical predicted load of the nearest right neighbor cell at the previous moment into second cross-layer neighbor cell load data according to a preset format, and transferring, by the nearest right neighbor cell, the second cross-layer neighbor cell load data to the corresponding target base station cell, where the second neighbor cell group load data includes cross-layer neighbor cell load data corresponding to a right neighbor cell same-direction group of the nearest right neighbor cell, and the second target load data includes cross-layer neighbor cell load data corresponding to all primary neighbor cells excluding the primary neighbor cell of the $K^{th}$ layer in the right neighbor cell same-direction group of the nearest right neighbor cell.

In some optional implementations, the target base station cell is set to $C_8$, the right neighbor cell same-direction group corresponding to the target base station cell $C_8$ is set to $\{C_9, C_{10}, C_{11}, C_{12}, C_{13}, C_{14}\}$, where the nearest right neighbor cell corresponding to the target base station cell $C_8$ is $C_9$, and the target base station cell $C_8$ receives cross-layer neighbor cell load data transferred from the right neighbor cell same-direction group by the following processes: the nearest right neighbor cell $C_9$ receives cross-layer neighbor cell load data $M_2=\{L(10), L(11), L(12), L(13), L(14), L(15)\}$ from its own left neighbor cell same-direction group $\{C_{10}, C_{11}, C_{12}, C_{13}, C_{14}, C_{15}\}$; after deleting the load $L(15)$ corresponding to the primary neighbor cell $C_{15}$ of the $K^{th}$ layer in its right neighbor cell same-direction group from $M_2$, the nearest right neighbor cell $C_9$ adds its own load $L(9)$ to be transferred to the target base station cell $C_8$ at the current moment to form the corresponding second cross-layer neighbor cell load data, that is, $M_3=\{L(9), L(10), L(11), L(12), L(13), L(14)\}$, which is then transferred to the target base station cell $C_8$.

In this embodiment, the nearest right neighbor cell and the nearest left neighbor cell constitute the left and right primary neighbor cells of the corresponding base station cell. In this embodiment, the load information transferred by the base station cell is based on a real-time load of the base station cell at the current moment, a historical predicted load corresponding to the previous moment, and load information of a primary neighbor cell in the corresponding cross-layer same-direction group.

In this embodiment, before preparing to transfer the load data to the target base station cell, the nearest left neighbor cell firstly receives cross-layer neighbor cell load data transferred by its own left neighbor cell same-direction group. At this time, since the primary neighbor cell of the $K^{th}$ layer in the left neighbor cell same-direction group corresponding to the nearest left neighbor cell is not a primary neighbor cell in the left neighbor cell same-direction group corresponding to the target base station cell, the load data transferred by the nearest left neighbor cell does not include the load data of the primary neighbor cell of the $K^{th}$ layer in the left neighbor cell same-direction group corresponding to the nearest left neighbor cell. Before preparing to transfer the load data to the target base station cell, the nearest right neighbor cell firstly receives cross-layer neighbor cell load data transferred by its own right neighbor cell same-direction group. At this time, since the primary neighbor cell of the $K^{th}$ layer in the right neighbor cell same-direction group corresponding to the nearest right neighbor cell is not a primary neighbor cell in the right neighbor cell same-direction group corresponding to the target base station cell, the load data transferred by the target base station cell does not include the load data of the primary neighbor cell of the $K^{th}$ layer in the right neighbor cell same-direction group corresponding to the nearest right neighbor cell.

In this embodiment, after the load of the primary neighbor cell of the $K^{th}$ layer in the left neighbor cell same-direction group corresponding to the nearest left neighbor cell or the load of the primary neighbor cell of the $K^{th}$ layer in the right neighbor cell same-direction group corresponding to the nearest right neighbor cell is deleted from the neighbor cell group load data stored in a preset format, the real-time load at the current moment and the historical predicted load corresponding to the previous moment of the nearest left neighbor cell or the nearest right neighbor cell are added to form the load data stored in the preset format, which is then transferred to the target base station cell.

Through the above operations, load information is transferred among the base station cells in a directional relayed manner.

In some embodiments, determining, in the plurality of base station cells located on the preset load migration line, the cross-layer same-direction group (i.e., operation S101) is implemented by the following operations 71 to 73.

At operation 71, acquiring granularity data of switching frequency corresponding to each base station cell on the preset load migration line, and selecting a neighbor cell with the largest granularity data of switching frequency as a primary neighbor cell of the base station cell, where the granularity data of switching frequency represents the number of user switches between the base station cell and a neighbor cell corresponding to the base station cell within a preset time period.

At operation 72, taking a selected left primary neighbor cell and a selected right primary neighbor cell corresponding to each base station cell as a base station cell same-direction group corresponding to the base station cell.

At operation 73, taking the target base station cell as a start point, selecting K continuous base station cells corresponding to the base station cell same-direction groups in both forward and reverse directions of the preset load migration line, respectively, and performing de-duplication on the selected base station cells in the base station cell same-direction groups to obtain the cross-layer same-direction group.

In this embodiment, according to hour granularity statistical data of "neighbor cell pair" switches between the base station $C_i$ and each neighbor cell within a certain time period (for example, 168 hours corresponding to one week), including switches from the base station cell $C_i$ to a neighbor cell and from a neighbor cell to the base station cell $C_i$, neighbor cells of the base station cell $C_i$ are classified into two types by a clustering algorithm, where the type having more switches is the primary neighbor cells of the base station cell $C_i$. Apparently, based on the information of network engineering parameters of the base station cell $C_i$ and the neighbor cells, such as installation site, coverage direction and the like, or further referring to the switching statistical data, a network planning and optimization worker may manually screen the nearest neighbor cells on left side and right side of the base station cell $C_i$ along a direction of the high-speed rail line, and set the nearest left and right neighbor cells as the primary neighbor cells of the base station cell $C_i$. Then, the nearest left and right neighbor cells of the base station cell $C_i$ are taken as the corresponding same-direction group of the base station cell $C_i$, and, based on the association between the same-direction groups corresponding to the plurality of base station cells, the cross-layer same-direction group corresponding to each base station cell is determined. For example, if $C_2$ is a right neighbor cell of the same-direction group of $C_1$, and $C_3$ is a right neighbor cell of the same-direction group of $C_2$, then it may be associated and determined that $C_3$ is a right neighbor cell of $C_1$ crossing one layer, so on and so forth, thereby obtaining $C_K$, a right neighbor cell of $C_1$ crossing K layers. Therefore, $\{C_1, C_2, ..., C_K\}$ form a cross-layer same-direction group of $C_1$ crossing K layers.

In this embodiment, primary neighbor cells of the base station cell are classified into left primary neighbor cells or right primary neighbor cells by matching and screening with a space-time feature pattern of load migration of the primary neighbor cells on lines of a same direction, and divided into a same-direction line group, that is, a same-direction group.

For the target base station cell $C_i$ and the primary neighbor cells thereof, several time periods with the largest number of switches are selected from the switching statistical data of hour granularity in one week. For example, 2 busy time periods with the largest number of switches are selected every day, then 14 hours are obtained in one week. Then, user number statistical data D2 of a granularity of 10 to 60 seconds (such as 30 seconds) in these time periods is acquired and divided into two types by a clustering algorithm, where a load with more users is set to 1, and a load with fewer users is set to 0. Next, primary neighbor cells 1 and 2 in accord with the load migration space-time features as shown in table 1 or table 2 (as long as either is satisfied) are searched and screened, and thereby used as the left neighbor cell and the right neighbor cell of the target base station cell $C_i$.

Table 1

| Load | Primary neighbor cell 1 | Target base station cell $C_i$ | Primary neighbor cell 2 |
|---|---|---|---|
| Moment 1 | 1 | 0 | 0 |
| Moment 2 | 0 | 1 | 0 |
| Moment 3 | 0 | 0 | 1 |

Table 2

| Load | Primary neighbor | Target base station | Primary neighbor |
|---|---|---|---|
| Moment 1 | 0 | 0 | 1 |
| Moment 2 | 0 | 1 | 0 |
| Moment 3 | 1 | 0 | 0 |

In this embodiment, a cross-layer same-direction group of each base station cell is determined from a plurality of associated same-direction groups. If $C_2$ is a right neighbor cell of the same-direction group of $C_1$, and $C_3$ is a right neighbor cell of the same-direction group of $C_2$, then it may be associated and determined that $C_3$ is a right neighbor cell of $C_1$ crossing one layer, so on and so forth, thereby obtaining $C_K$, a right neighbor cell of $C_1$ crossing K layers, and $\{C_1, C_2, ..., C_K\}$ form a cross-layer same-direction group of $C_1$ crossing K layers. In the embodiments of the present disclosure, the determined cross-layer same-direction group corresponding to the target base station cell includes a left cross-layer same-direction group and a right cross-layer same-direction group, for example, a left neighbor cell same-direction group and a right neighbor cell same-direction group, where each of the left neighbor cell same-direction group and the right neighbor cell same-direction group has K layers of primary neighbor cells, and K is a preset value. For example, if it is expected to predict a future possible load of the target base station cell $C_i$ earlier and sense a load at a further distance, then K may be set to a large value, but this may cause higher overhead and difficulty in load information transfer across layers, as well as increased random uncertainty. Therefore, setting of the K value should consider both the target of load prediction and the overhead cost, and the like. For example, $K \leq 9$. Referring to FIG. 2, $C_1$, $C_2$, $C_3$, $C_4$, $C_5$ and $C_6$ are cross-layer same-direction left neighbor cells of $C_7$ crossing 6 layers, $C_8$, $C_9$, $C_{10}$, $C_{11}$, $C_{12}$ and $C_{13}$ are cross-layer same-direction right neighbor cells of $C_7$ crossing 6 layers, and load information may be transferred in a relayed manner through 6 layers to the left or right.

Examples 1 to 6 are given below to illustrate the load prediction according to the embodiments of the present disclosure.

Before the description, a segment of a linear high-speed rail private network including 20 base station cells connected into continuous coverage is given, where adjacent base station cells are primary neighbor cells, and left or right neighbor cells of each other, and together form a cross-layer same-direction group. The actual load conditions are shown in corresponding tables of the various examples, where each value represents a load of user number. The examples set forth several typical scenarios, including load distribution, migration and change. In the examples 1 to 6 of the present disclosure, K=6, $\alpha$=0.5, $\beta$=0.5, and $\gamma$=0.5, and optimization of model parameters of the load prediction model adopts the following equation in the second mode for optimization of the model parameters:

$$\text{dif}(m) = \mu * \left[ \hat{L}^i(m) - \hat{L}^i(m-1) \right] + (1-\mu) * \left[ L^i(m) - L^i(m-1) \right], \text{ and } \mu = 0.5.$$

Example 1

A case of a single high-speed train moving in a forward direction from left to right is simulated, where actual loads and predicted loads are respectively shown in tables 3 and 4. As can be seen from the results of the predicted loads, the prediction model can detect and sense upcoming loads and change trends in advance, and by combining the actual loads and the predicted loads, a base station cell can prepare operations such as energy conservation or load control in advance.

Table 3

| T | C1 | C2 | C3 | C4 | C5 | C6 | C7 | C8 | C9 | C10 | C11 | C12 | C13 | C14 | C15 |
|---|----|----|----|----|----|----|----|----|----|-----|-----|-----|-----|-----|-----|
| T0 | 0 | 0 | 0 | 0 | 0 | 0 | 0 | 0 | 0 | 0 | 0 | 0 | 0 | 0 | 0 |
| T1 | 100 | 0 | 0 | 0 | 0 | 0 | 0 | 0 | 0 | 0 | 0 | 0 | 0 | 0 | 0 |
| T2 | 0 | 100 | 0 | 0 | 0 | 0 | 0 | 0 | 0 | 0 | 0 | 0 | 0 | 0 | 0 |
| T3 | 0 | 0 | 100 | 0 | 0 | 0 | 0 | 0 | 0 | 0 | 0 | 0 | 0 | 0 | 0 |
| T4 | 0 | 0 | 0 | 100 | 0 | 0 | 0 | 0 | 0 | 0 | 0 | 0 | 0 | 0 | 0 |
| T5 | 0 | 0 | 0 | 0 | 100 | 0 | 0 | 0 | 0 | 0 | 0 | 0 | 0 | 0 | 0 |
| T6 | 0 | 0 | 0 | 0 | 0 | 100 | 0 | 0 | 0 | 0 | 0 | 0 | 0 | 0 | 0 |
| T7 | 0 | 0 | 0 | 0 | 0 | 0 | 100 | 0 | 0 | 0 | 0 | 0 | 0 | 0 | 0 |
| T8 | 0 | 0 | 0 | 0 | 0 | 0 | 0 | 100 | 0 | 0 | 0 | 0 | 0 | 0 | 0 |
| T9 | 0 | 0 | 0 | 0 | 0 | 0 | 0 | 0 | 100 | 0 | 0 | 0 | 0 | 0 | 0 |
| T10 | 0 | 0 | 0 | 0 | 0 | 0 | 0 | 0 | 0 | 100 | 0 | 0 | 0 | 0 | 0 |
| T11 | 0 | 0 | 0 | 0 | 0 | 0 | 0 | 0 | 0 | 0 | 100 | 0 | 0 | 0 | 0 |
| T12 | 0 | 0 | 0 | 0 | 0 | 0 | 0 | 0 | 0 | 0 | 0 | 100 | 0 | 0 | 0 |
| T13 | 0 | 0 | 0 | 0 | 0 | 0 | 0 | 0 | 0 | 0 | 0 | 0 | 100 | 0 | 0 |
| T14 | 0 | 0 | 0 | 0 | 0 | 0 | 0 | 0 | 0 | 0 | 0 | 0 | 0 | 100 | 0 |
| T15 | 0 | 0 | 0 | 0 | 0 | 0 | 0 | 0 | 0 | 0 | 0 | 0 | 0 | 0 | 100 |

Table 4

| T | C1 | C2 | C3 | C4 | C5 | C6 | C7 | C8 | C9 | C10 | C11 | C12 | C13 | C14 | C15 |
|---|----|----|----|----|----|----|----|----|----|-----|-----|-----|-----|-----|-----|
| T0 | 0 | 0 | 0 | 0 | 0 | 0 | 0 | 0 | 0 | 0 | 0 | 0 | 0 | 0 | 0 |
| T1 | 73 | 18 | 11 | 7 | 5 | 3 | 2 | 2 | 1 | 1 | 0 | 0 | 0 | 0 | 0 |
| T2 | 25 | 63 | 24 | 16 | 11 | 7 | 5 | 3 | 2 | 2 | 1 | 0 | 0 | 0 | 0 |
| T3 | 12 | 16 | 60 | 23 | 16 | 11 | 7 | 5 | 3 | 2 | 2 | 1 | 0 | 0 | 0 |
| T4 | 10 | 11 | 15 | 60 | 23 | 16 | 11 | 8 | 5 | 4 | 3 | 2 | 1 | 0 | 0 |
| T5 | 8 | 9 | 11 | 15 | 60 | 24 | 17 | 12 | 8 | 6 | 4 | 3 | 2 | 2 | 0 |
| T6 | 6 | 8 | 9 | 11 | 15 | 60 | 24 | 17 | 12 | 9 | 6 | 4 | 3 | 3 | 2 |

(continued)

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T7 | 5 | 6 | 8 | 9 | 11 | 15 | 60 | 24 | 17 | 12 | 9 | 6 | 5 | 3 | 3 |
| T8 | 5 | 5 | 6 | 8 | 9 | 11 | 15 | 60 | 24 | 17 | 12 | 9 | 6 | 5 | 3 |
| T9 | 4 | 5 | 5 | 6 | 8 | 9 | 11 | 15 | 60 | 24 | 17 | 13 | 9 | 7 | 5 |
| T10 | 3 | 4 | 5 | 5 | 6 | 8 | 9 | 11 | 15 | 60 | 24 | 17 | 13 | 9 | 7 |
| T11 | 2 | 3 | 4 | 5 | 5 | 6 | 8 | 9 | 11 | 15 | 60 | 24 | 17 | 13 | 9 |
| T12 | 2 | 2 | 3 | 4 | 5 | 5 | 6 | 8 | 9 | 11 | 15 | 60 | 24 | 17 | 13 |
| T13 | 2 | 2 | 2 | 3 | 4 | 5 | 5 | 6 | 8 | 9 | 11 | 15 | 60 | 24 | 17 |
| T14 | 2 | 2 | 2 | 2 | 3 | 4 | 5 | 5 | 6 | 8 | 9 | 11 | 15 | 60 | 24 |
| T15 | 1 | 2 | 2 | 2 | 2 | 3 | 4 | 5 | 5 | 6 | 8 | 9 | 11 | 15 | 60 |

Example 2

A case of a single high-speed train moving in a reverse direction from right to left is simulated, where actual loads and predicted loads are respectively shown in tables 5 and 6. As can be seen from the results of the predicted loads, the prediction model can detect and sense upcoming loads and change trends in advance, and by combining the actual loads and the predicted loads, a base station cell can prepare operations such as energy conservation or load control in advance.

Table 5

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T0 | 0 | 0 | 0 | 0 | 0 | 0 | 0 | 0 | 0 | 0 | 0 | 0 | 0 | 0 | 0 |
| T1 | 0 | 0 | 0 | 0 | 0 | 0 | 0 | 0 | 0 | 0 | 0 | 0 | 0 | 0 | 100 |
| T2 | 0 | 0 | 0 | 0 | 0 | 0 | 0 | 0 | 0 | 0 | 0 | 0 | 0 | 100 | 0 |
| T3 | 0 | 0 | 0 | 0 | 0 | 0 | 0 | 0 | 0 | 0 | 0 | 0 | 100 | 0 | 0 |
| T4 | 0 | 0 | 0 | 0 | 0 | 0 | 0 | 0 | 0 | 0 | 0 | 100 | 0 | 0 | 0 |
| T5 | 0 | 0 | 0 | 0 | 0 | 0 | 0 | 0 | 0 | 0 | 100 | 0 | 0 | 0 | 0 |
| T6 | 0 | 0 | 0 | 0 | 0 | 0 | 0 | 0 | 0 | 100 | 0 | 0 | 0 | 0 | 0 |
| T7 | 0 | 0 | 0 | 0 | 0 | 0 | 0 | 0 | 100 | 0 | 0 | 0 | 0 | 0 | 0 |
| T8 | 0 | 0 | 0 | 0 | 0 | 0 | 0 | 100 | 0 | 0 | 0 | 0 | 0 | 0 | 0 |
| T9 | 0 | 0 | 0 | 0 | 0 | 0 | 100 | 0 | 0 | 0 | 0 | 0 | 0 | 0 | 0 |
| T10 | 0 | 0 | 0 | 0 | 0 | 100 | 0 | 0 | 0 | 0 | 0 | 0 | 0 | 0 | 0 |
| T11 | 0 | 0 | 0 | 0 | 100 | 0 | 0 | 0 | 0 | 0 | 0 | 0 | 0 | 0 | 0 |
| T12 | 0 | 0 | 0 | 100 | 0 | 0 | 0 | 0 | 0 | 0 | 0 | 0 | 0 | 0 | 0 |
| T13 | 0 | 0 | 100 | 0 | 0 | 0 | 0 | 0 | 0 | 0 | 0 | 0 | 0 | 0 | 0 |
| T14 | 0 | 100 | 0 | 0 | 0 | 0 | 0 | 0 | 0 | 0 | 0 | 0 | 0 | 0 | 0 |
| T15 | 100 | 0 | 0 | 0 | 0 | 0 | 0 | 0 | 0 | 0 | 0 | 0 | 0 | 0 | 0 |

Table 6

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T0 | 0 | 0 | 0 | 0 | 0 | 0 | 2 | 2 | 3 | 4 | 6 | 9 | 12 | 17 | 25 |
| T1 | 0 | 0 | 0 | 0 | 0 | 2 | 3 | 3 | 4 | 6 | 9 | 13 | 18 | 25 | 60 |
| T2 | 0 | 0 | 0 | 0 | 2 | 3 | 3 | 5 | 7 | 9 | 13 | 18 | 25 | 60 | 14 |
| T3 | 0 | 0 | 1 | 2 | 3 | 4 | 5 | 7 | 9 | 13 | 18 | 25 | 60 | 14 | 9 |

(continued)

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T4 | 0 | 1 | 2 | 3 | 4 | 5 | 7 | 10 | 13 | 18 | 25 | 60 | 14 | 9 | 7 |
| T5 | 1 | 2 | 3 | 4 | 5 | 7 | 10 | 13 | 18 | 25 | 60 | 14 | 9 | 7 | 6 |
| T6 | 2 | 3 | 4 | 5 | 7 | 10 | 13 | 18 | 26 | 60 | 14 | 9 | 7 | 6 | 5 |
| T7 | 3 | 4 | 5 | 7 | 10 | 13 | 19 | 26 | 60 | 14 | 9 | 7 | 6 | 5 | 4 |
| T8 | 4 | 5 | 7 | 10 | 14 | 19 | 26 | 60 | 14 | 9 | 7 | 6 | 5 | 4 | 3 |
| T9 | 5 | 7 | 10 | 14 | 19 | 26 | 60 | 14 | 9 | 7 | 6 | 5 | 4 | 3 | 3 |
| T10 | 7 | 10 | 14 | 19 | 26 | 60 | 14 | 9 | 7 | 6 | 5 | 4 | 3 | 3 | 2 |
| T11 | 10 | 14 | 19 | 26 | 60 | 14 | 9 | 7 | 6 | 5 | 4 | 3 | 3 | 2 | 2 |
| T12 | 14 | 19 | 26 | 60 | 14 | 9 | 7 | 6 | 5 | 4 | 3 | 3 | 2 | 2 | 1 |
| T13 | 19 | 26 | 60 | 14 | 9 | 7 | 6 | 5 | 4 | 3 | 3 | 2 | 2 | 1 | 1 |
| T14 | 26 | 60 | 14 | 9 | 7 | 6 | 5 | 4 | 3 | 3 | 2 | 2 | 1 | 1 | 1 |
| T15 | 60 | 14 | 9 | 7 | 6 | 5 | 4 | 3 | 3 | 2 | 2 | 1 | 1 | 1 | 1 |

Example 3

A case of two high-speed trains moving in opposite directions, i.e., from left to right and from right to left respectively, is simulated, where actual loads and predicted loads are respectively shown in tables 7 and 8. As can be seen from the results of the predicted loads, the prediction model can detect and sense upcoming loads and change trends in advance, and by combining the actual loads and the predicted loads, a base station cell can prepare operations such as energy conservation or load control in advance.

Table 7

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T0 | 100 | 0 | 0 | 0 | 0 | 0 | 0 | 0 | 0 | 0 | 0 | 0 | 0 | 0 | 0 |
| T1 | 0 | 100 | 0 | 0 | 0 | 0 | 0 | 0 | 0 | 0 | 0 | 0 | 0 | 0 | 100 |
| T2 | 0 | 0 | 100 | 0 | 0 | 0 | 0 | 0 | 0 | 0 | 0 | 0 | 0 | 100 | 0 |
| T3 | 0 | 0 | 0 | 100 | 0 | 0 | 0 | 0 | 0 | 0 | 0 | 0 | 100 | 0 | 0 |
| T4 | 0 | 0 | 0 | 0 | 100 | 0 | 0 | 0 | 0 | 0 | 0 | 100 | 0 | 0 | 0 |
| T5 | 0 | 0 | 0 | 0 | 0 | 100 | 0 | 0 | 0 | 0 | 100 | 0 | 0 | 0 | 0 |
| T6 | 0 | 0 | 0 | 0 | 0 | 0 | 100 | 0 | 0 | 100 | 0 | 0 | 0 | 0 | 0 |
| T7 | 0 | 0 | 0 | 0 | 0 | 0 | 0 | 100 | 100 | 0 | 0 | 0 | 0 | 0 | 0 |
| T8 | 0 | 0 | 0 | 0 | 0 | 0 | 0 | 100 | 100 | 0 | 0 | 0 | 0 | 0 | 0 |
| T9 | 0 | 0 | 0 | 0 | 0 | 0 | 100 | 0 | 0 | 100 | 0 | 0 | 0 | 0 | 0 |
| T10 | 0 | 0 | 0 | 0 | 0 | 100 | 0 | 0 | 0 | 0 | 100 | 0 | 0 | 0 | 0 |
| T11 | 0 | 0 | 0 | 0 | 100 | 0 | 0 | 0 | 0 | 0 | 0 | 100 | 0 | 0 | 0 |
| T12 | 0 | 0 | 0 | 100 | 0 | 0 | 0 | 0 | 0 | 0 | 0 | 0 | 100 | 0 | 0 |
| T13 | 0 | 0 | 100 | 0 | 0 | 0 | 0 | 0 | 0 | 0 | 0 | 0 | 0 | 100 | 0 |
| T14 | 0 | 100 | 0 | 0 | 0 | 0 | 0 | 0 | 0 | 0 | 0 | 0 | 0 | 0 | 100 |
| T15 | 100 | 0 | 0 | 0 | 0 | 0 | 0 | 0 | 0 | 0 | 0 | 0 | 0 | 0 | 0 |

Table 8

| T | C1 | C2 | C3 | C4 | C5 | C6 | C7 | C8 | C9 | C10 | C11 | C12 | C13 | C14 | C15 |
|---|----|----|----|----|----|----|----|----|----|-----|-----|-----|-----|-----|-----|
| T0 | 0 | 0 | 0 | 0 | 0 | 0 | 0 | 0 | 0 | 0 | 0 | 0 | 0 | 0 | 0 |
| T1 | 11 | 7 | 5 | 3 | 2 | 2 | 1 | 1 | 1 | 1 | 2 | 2 | 3 | 5 | 7 |
| T2 | 24 | 16 | 11 | 7 | 5 | 3 | 3 | 3 | 3 | 3 | 3 | 5 | 7 | 11 | 16 |
| T3 | 60 | 23 | 16 | 11 | 7 | 5 | 5 | 4 | 4 | 5 | 5 | 7 | 11 | 16 | 24 |
| T4 | 15 | 60 | 23 | 16 | 12 | 9 | 8 | 6 | 6 | 8 | 9 | 12 | 17 | 24 | 59 |
| T5 | 11 | 15 | 60 | 24 | 18 | 14 | 11 | 10 | 10 | 11 | 15 | 19 | 25 | 60 | 14 |
| T6 | 9 | 12 | 16 | 61 | 26 | 20 | 17 | 15 | 15 | 17 | 21 | 28 | 61 | 14 | 9 |
| T7 | 8 | 10 | 13 | 18 | 63 | 29 | 24 | 22 | 22 | 24 | 30 | 63 | 16 | 11 | 8 |
| T8 | 7 | 10 | 12 | 15 | 20 | 67 | 33 | 30 | 31 | 34 | 66 | 18 | 12 | 10 | 8 |
| T9 | 7 | 9 | 11 | 14 | 18 | 25 | 73 | 42 | 43 | 72 | 23 | 16 | 12 | 9 | 8 |
| T10 | 8 | 9 | 12 | 15 | 19 | 25 | 34 | 85 | 84 | 31 | 22 | 17 | 13 | 10 | 8 |
| T11 | 8 | 10 | 12 | 16 | 21 | 28 | 37 | 73 | 73 | 33 | 25 | 19 | 14 | 11 | 8 |
| T12 | 8 | 11 | 14 | 19 | 25 | 33 | 69 | 15 | 13 | 67 | 30 | 22 | 17 | 13 | 9 |
| T13 | 10 | 13 | 17 | 23 | 31 | 66 | 20 | 9 | 9 | 19 | 64 | 28 | 21 | 15 | 12 |
| T14 | 12 | 16 | 22 | 29 | 64 | 18 | 10 | 13 | 13 | 11 | 17 | 63 | 26 | 20 | 14 |
| T15 | 15 | 20 | 28 | 63 | 16 | 10 | 11 | 12 | 12 | 12 | 11 | 16 | 62 | 25 | 19 |

Example 4

A case of two high-speed trains simultaneously moving in a forward direction from left to right from different start points is simulated, where actual loads and predicted loads are respectively shown in tables 9 and 10. As can be seen from the results of the predicted loads, the prediction model can detect and sense upcoming loads and change trends in advance, and by combining the actual loads and the predicted loads, a base station cell can prepare operations such as energy conservation or load control in advance.

Table 9

| T | C1 | C2 | C3 | C4 | C5 | C6 | C7 | C8 | C9 | C10 | C11 | C12 | C13 | C14 | C15 |
|---|----|----|----|----|----|----|----|----|----|-----|-----|-----|-----|-----|-----|
| T0 | 0 | 0 | 0 | 0 | 0 | 0 | 0 | 0 | 0 | 0 | 0 | 0 | 0 | 0 | 0 |
| T1 | 100 | 0 | 0 | 0 | 0 | 0 | 0 | 0 | 0 | 100 | 0 | 0 | 0 | 0 | 0 |
| T2 | 0 | 100 | 0 | 0 | 0 | 0 | 0 | 0 | 0 | 0 | 100 | 0 | 0 | 0 | 0 |
| T3 | 0 | 0 | 100 | 0 | 0 | 0 | 0 | 0 | 0 | 0 | 0 | 100 | 0 | 0 | 0 |
| T4 | 0 | 0 | 0 | 100 | 0 | 0 | 0 | 0 | 0 | 0 | 0 | 0 | 100 | 0 | 0 |
| T5 | 0 | 0 | 0 | 0 | 100 | 0 | 0 | 0 | 0 | 0 | 0 | 0 | 0 | 100 | 0 |
| T6 | 0 | 0 | 0 | 0 | 0 | 100 | 0 | 0 | 0 | 0 | 0 | 0 | 0 | 0 | 100 |
| T7 | 0 | 0 | 0 | 0 | 0 | 0 | 100 | 0 | 0 | 0 | 0 | 0 | 0 | 0 | 0 |
| T8 | 0 | 0 | 0 | 0 | 0 | 0 | 0 | 100 | 0 | 0 | 0 | 0 | 0 | 0 | 0 |
| T9 | 0 | 0 | 0 | 0 | 0 | 0 | 0 | 0 | 100 | 0 | 0 | 0 | 0 | 0 | 0 |
| T10 | 0 | 0 | 0 | 0 | 0 | 0 | 0 | 0 | 0 | 100 | 0 | 0 | 0 | 0 | 0 |
| T11 | 0 | 0 | 0 | 0 | 0 | 0 | 0 | 0 | 0 | 0 | 100 | 0 | 0 | 0 | 0 |
| T12 | 0 | 0 | 0 | 0 | 0 | 0 | 0 | 0 | 0 | 0 | 0 | 100 | 0 | 0 | 0 |
| T13 | 0 | 0 | 0 | 0 | 0 | 0 | 0 | 0 | 0 | 0 | 0 | 0 | 100 | 0 | 0 |
| T14 | 0 | 0 | 0 | 0 | 0 | 0 | 0 | 0 | 0 | 0 | 0 | 0 | 0 | 100 | 0 |

(continued)

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T15 | 0 | 0 | 0 | 0 | 0 | 0 | 0 | 0 | 0 | 0 | 0 | 0 | 0 | 0 | 100 |

Table 10

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T0 | 0 | 0 | 0 | 0 | 0 | 0 | 0 | 0 | 0 | 0 | 0 | 0 | 0 | 0 | 0 |
| T1 | 74 | 19 | 13 | 10 | 8 | 8 | 10 | 13 | 19 | 74 | 18 | 11 | 7 | 5 | 3 |
| T2 | 25 | 65 | 26 | 18 | 14 | 12 | 12 | 14 | 14 | 19 | 58 | 20 | 13 | 9 | 6 |
| T3 | 13 | 17 | 62 | 26 | 20 | 16 | 14 | 14 | 13 | 12 | 16 | 60 | 22 | 15 | 10 |
| T4 | 10 | 12 | 17 | 62 | 27 | 21 | 17 | 15 | 13 | 13 | 11 | 16 | 60 | 23 | 16 |
| T5 | 9 | 11 | 13 | 18 | 63 | 28 | 21 | 17 | 15 | 13 | 13 | 11 | 16 | 61 | 23 |
| T6 | 7 | 9 | 11 | 13 | 18 | 63 | 28 | 22 | 18 | 15 | 14 | 13 | 11 | 16 | 61 |
| T7 | 6 | 8 | 9 | 11 | 13 | 18 | 63 | 28 | 22 | 18 | 15 | 15 | 13 | 11 | 16 |
| T8 | 6 | 7 | 8 | 9 | 11 | 13 | 18 | 63 | 28 | 22 | 18 | 15 | 14 | 13 | 11 |
| T9 | 5 | 6 | 7 | 8 | 9 | 11 | 13 | 18 | 63 | 28 | 22 | 18 | 15 | 14 | 13 |
| T10 | 4 | 5 | 6 | 7 | 8 | 9 | 11 | 13 | 18 | 63 | 28 | 22 | 18 | 16 | 14 |
| T11 | 3 | 4 | 5 | 6 | 7 | 8 | 9 | 11 | 13 | 18 | 63 | 28 | 22 | 18 | 16 |
| T12 | 3 | 3 | 4 | 5 | 6 | 7 | 8 | 9 | 11 | 13 | 18 | 63 | 27 | 21 | 17 |
| T13 | 2 | 3 | 3 | 4 | 5 | 6 | 7 | 8 | 9 | 11 | 13 | 17 | 62 | 27 | 20 |
| T14 | 2 | 2 | 3 | 3 | 4 | 5 | 6 | 7 | 8 | 9 | 11 | 13 | 17 | 62 | 26 |
| T15 | 2 | 2 | 2 | 3 | 3 | 4 | 5 | 6 | 7 | 8 | 9 | 11 | 13 | 16 | 61 |

Example 5

A case where a further single high-speed train moving in a reverse direction is randomly added to a certain cell at a certain moment during forward movement of a single high-speed train in a forward direction from left to right is simulated, where actual loads and predicted loads are respectively shown in tables 11 and 12. As can be seen from the results of the predicted loads, the prediction model can detect and sense upcoming loads and change trends in advance, and by combining the actual loads and the predicted loads, a base station cell can prepare operations such as energy conservation or load control in advance.

Table 11

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T0 | 0 | 0 | 0 | 0 | 0 | 0 | 0 | 0 | 0 | 0 | 0 | 0 | 0 | 0 | 0 |
| T1 | 100 | 0 | 0 | 0 | 0 | 0 | 0 | 0 | 0 | 0 | 0 | 0 | 0 | 0 | 0 |
| T2 | 0 | 100 | 0 | 0 | 0 | 0 | 0 | 0 | 0 | 0 | 0 | 0 | 0 | 0 | 0 |
| T3 | 0 | 0 | 100 | 0 | 0 | 0 | 0 | 0 | 0 | 0 | 0 | 0 | 0 | 0 | 0 |
| T4 | 0 | 0 | 0 | 100 | 0 | 0 | 0 | 0 | 0 | 0 | 100 | 0 | 0 | 0 | 0 |
| T5 | 0 | 0 | 0 | 0 | 100 | 0 | 0 | 0 | 0 | 100 | 0 | 0 | 0 | 0 | 0 |
| T6 | 0 | 0 | 0 | 0 | 0 | 100 | 0 | 0 | 100 | 0 | 0 | 0 | 0 | 0 | 0 |
| T7 | 0 | 0 | 0 | 0 | 0 | 0 | 200 | 0 | 0 | 0 | 0 | 0 | 0 | 0 | 0 |
| T8 | 0 | 0 | 0 | 0 | 0 | 100 | 0 | 100 | 0 | 0 | 0 | 0 | 0 | 0 | 0 |
| T9 | 0 | 0 | 0 | 0 | 100 | 0 | 0 | 0 | 100 | 0 | 0 | 0 | 0 | 0 | 0 |

(continued)

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T10 | 0 | 0 | 0 | 100 | 0 | 0 | 0 | 0 | 0 | 100 | 0 | 0 | 0 | 0 | 0 |
| T11 | 0 | 0 | 100 | 0 | 0 | 0 | 0 | 0 | 0 | 0 | 100 | 0 | 0 | 0 | 0 |
| T12 | 0 | 100 | 0 | 0 | 0 | 0 | 0 | 0 | 0 | 0 | 0 | 100 | 0 | 0 | 0 |
| T13 | 100 | 0 | 0 | 0 | 0 | 0 | 0 | 0 | 0 | 0 | 0 | 0 | 100 | 0 | 0 |
| T14 | 0 | 0 | 0 | 0 | 0 | 0 | 0 | 0 | 0 | 0 | 0 | 0 | 0 | 100 | 0 |
| T15 | 0 | 0 | 0 | 0 | 0 | 0 | 0 | 0 | 0 | 0 | 0 | 0 | 0 | 0 | 100 |

Table 12

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T0 | 0 | 0 | 0 | 0 | 0 | 0 | 0 | 0 | 0 | 0 | 0 | 0 | 0 | 0 | 0 |
| T1 | 73 | 18 | 11 | 7 | 5 | 3 | 2 | 2 | 1 | 1 | 0 | 0 | 0 | 0 | 0 |
| T2 | 25 | 63 | 24 | 16 | 11 | 7 | 5 | 3 | 2 | 2 | 1 | 0 | 0 | 0 | 0 |
| T3 | 12 | 16 | 60 | 23 | 16 | 11 | 7 | 5 | 3 | 2 | 2 | 1 | 0 | 0 | 0 |
| T4 | 10 | 13 | 17 | 62 | 27 | 21 | 19 | 19 | 23 | 77 | 20 | 13 | 9 | 5 | 4 |
| T5 | 10 | 11 | 14 | 19 | 66 | 33 | 30 | 33 | 65 | 22 | 17 | 13 | 10 | 7 | 4 |
| T6 | 9 | 11 | 14 | 18 | 26 | 75 | 46 | 75 | 25 | 19 | 15 | 12 | 9 | 7 | 5 |
| T7 | 9 | 12 | 16 | 21 | 28 | 39 | 118 | 37 | 26 | 20 | 15 | 12 | 9 | 7 | 6 |
| T8 | 10 | 14 | 18 | 25 | 34 | 58 | 25 | 57 | 31 | 23 | 17 | 13 | 10 | 8 | 6 |
| T9 | 13 | 17 | 23 | 31 | 67 | 19 | 4 | 18 | 65 | 29 | 21 | 16 | 12 | 9 | 7 |
| T10 | 16 | 22 | 29 | 65 | 18 | 10 | 13 | 11 | 18 | 63 | 27 | 20 | 15 | 11 | 8 |
| T11 | 20 | 28 | 63 | 17 | 10 | 12 | 13 | 12 | 11 | 17 | 62 | 26 | 19 | 14 | 10 |
| T12 | 27 | 62 | 16 | 10 | 11 | 11 | 11 | 11 | 11 | 11 | 16 | 61 | 25 | 18 | 14 |
| T13 | 61 | 15 | 9 | 10 | 9 | 9 | 9 | 10 | 10 | 11 | 11 | 15 | 61 | 25 | 18 |
| T14 | 7 | 4 | 5 | 6 | 6 | 7 | 7 | 7 | 8 | 9 | 10 | 11 | 15 | 60 | 24 |
| T15 | 2 | 2 | 3 | 4 | 4 | 5 | 5 | 6 | 7 | 8 | 9 | 10 | 11 | 15 | 60 |

Example 6

A case where the number of users is randomly increased or decreased in some intermediate cells during movement of a single high-speed train in a forward direction from left to right is simulated, so as to simulate changes in the user load caused by passengers getting on/off the train at stations, where actual loads and predicted loads are respectively shown in tables 13 and 14. As can be seen from the results of the predicted loads, the prediction model can detect and sense upcoming loads and change trends in advance, and by combining the actual loads and the predicted loads, a cell can prepare operations such as energy conservation or load control in advance.

Table 13

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T0 | 0 | 0 | 0 | 0 | 0 | 0 | 0 | 0 | 0 | 0 | 0 | 0 | 0 | 0 | 0 |
| T1 | 100 | 0 | 0 | 0 | 0 | 0 | 0 | 0 | 0 | 0 | 0 | 0 | 0 | 0 | 0 |
| T2 | 0 | 100 | 0 | 0 | 0 | 0 | 0 | 0 | 0 | 0 | 0 | 0 | 0 | 0 | 0 |
| T3 | 0 | 0 | 100 | 0 | 0 | 0 | 0 | 0 | 0 | 0 | 0 | 0 | 0 | 0 | 0 |
| T4 | 0 | 0 | 0 | 100 | 0 | 0 | 0 | 0 | 0 | 0 | 0 | 0 | 0 | 0 | 0 |

(continued)

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T5 | 0 | 0 | 0 | 0 | 100 | 0 | 0 | 0 | 0 | 0 | 0 | 0 | 0 | 0 | 0 |
| T6 | 0 | 0 | 0 | 0 | 0 | 50 | 0 | 0 | 0 | 0 | 0 | 0 | 0 | 0 | 0 |
| T7 | 0 | 0 | 0 | 0 | 0 | 0 | 50 | 0 | 0 | 0 | 0 | 0 | 0 | 0 | 0 |
| T8 | 0 | 0 | 0 | 0 | 0 | 0 | 0 | 50 | 0 | 0 | 0 | 0 | 0 | 0 | 0 |
| T9 | 0 | 0 | 0 | 0 | 0 | 0 | 0 | 0 | 50 | 0 | 0 | 0 | 0 | 0 | 0 |
| T10 | 0 | 0 | 0 | 0 | 0 | 0 | 0 | 0 | 0 | 200 | 0 | 0 | 0 | 0 | 0 |
| T11 | 0 | 0 | 0 | 0 | 0 | 0 | 0 | 0 | 0 | 0 | 200 | 0 | 0 | 0 | 0 |
| T12 | 0 | 0 | 0 | 0 | 0 | 0 | 0 | 0 | 0 | 0 | 0 | 200 | 0 | 0 | 0 |
| T13 | 0 | 0 | 0 | 0 | 0 | 0 | 0 | 0 | 0 | 0 | 0 | 0 | 200 | 0 | 0 |
| T14 | 0 | 0 | 0 | 0 | 0 | 0 | 0 | 0 | 0 | 0 | 0 | 0 | 0 | 100 | 0 |
| T15 | 0 | 0 | 0 | 0 | 0 | 0 | 0 | 0 | 0 | 0 | 0 | 0 | 0 | 0 | 100 |

Table 14

| T | C1 | C2 | C3 | C4 | C5 | C6 | C7 | C8 | C9 | C10 | C11 | C12 | C13 | C14 | C15 |
|---|---|---|---|---|---|---|---|---|---|---|---|---|---|---|---|
| T0 | 0 | 0 | 0 | 0 | 0 | 0 | 0 | 0 | 0 | 0 | 0 | 0 | 0 | 0 | 0 |
| T1 | 73 | 18 | 11 | 7 | 5 | 3 | 2 | 2 | 1 | 1 | 0 | 0 | 0 | 0 | 0 |
| T2 | 25 | 63 | 24 | 16 | 11 | 7 | 5 | 3 | 2 | 2 | 1 | 0 | 0 | 0 | 0 |
| T3 | 12 | 16 | 60 | 23 | 16 | 11 | 7 | 5 | 3 | 2 | 2 | 1 | 0 | 0 | 0 |
| T4 | 10 | 11 | 15 | 60 | 23 | 16 | 11 | 8 | 5 | 4 | 3 | 2 | 1 | 0 | 0 |
| T5 | 8 | 9 | 11 | 15 | 60 | 24 | 15 | 11 | 8 | 6 | 4 | 3 | 2 | 2 | 0 |
| T6 | 5 | 5 | 6 | 6 | 8 | 26 | 17 | 22 | 8 | 6 | 4 | 3 | 2 | 2 | 1 |
| T7 | 4 | 4 | 5 | 6 | 8 | 11 | 31 | 14 | 10 | 8 | 6 | 4 | 3 | 2 | 2 |
| T8 | 3 | 4 | 4 | 6 | 8 | 11 | 16 | 31 | 13 | 10 | 7 | 6 | 4 | 3 | 2 |
| T9 | 2 | 3 | 4 | 6 | 7 | 10 | 15 | 22 | 30 | 13 | 9 | 7 | 5 | 4 | 3 |
| T10 | 3 | 3 | 4 | 6 | 7 | 9 | 13 | 20 | 34 | 140 | 39 | 26 | 18 | 13 | 9 |
| T11 | 2 | 3 | 4 | 5 | 6 | 7 | 11 | 17 | 26 | 35 | 116 | 43 | 29 | 20 | 14 |
| T12 | 2 | 3 | 4 | 4 | 5 | 7 | 8 | 13 | 20 | 24 | 30 | 118 | 45 | 31 | 22 |
| T13 | 2 | 3 | 3 | 4 | 5 | 6 | 8 | 9 | 16 | 19 | 23 | 30 | 119 | 46 | 29 |
| T14 | 2 | 3 | 3 | 4 | 4 | 5 | 6 | 8 | 10 | 11 | 12 | 12 | 13 | 51 | 33 |
| T15 | 2 | 3 | 3 | 3 | 4 | 5 | 6 | 7 | 7 | 8 | 8 | 8 | 9 | 13 | 62 |

An embodiment of the present disclosure further provides a dynamic load prediction apparatus for implementing the above embodiments and optional implementations. Details which have been explained above will not be repeated here. The terms "module," "unit," "subunit," and the like as used below may implement a combination of software and/or hardware of predetermined functions. Although the apparatus described in the embodiments below is preferably implemented in software, an implementation in hardware or a combination of software and hardware is also possible and contemplated.

FIG. 3 is a block diagram of a dynamic load prediction apparatus according to an embodiment of the present disclosure. As shown in FIG. 3, the apparatus includes: an acquisition module 31, an acquisition module 32, a receiving module 33, and a prediction module 34.

The determination module 31 is configured to determine, in a plurality of base station cells located on a preset load migration line, a cross-layer same-direction group, where a base station cell at each end of the cross-layer same-direction group is a primary neighbor cell of a $K^{th}$ layer corresponding to the target base station cell, and K is a preset value.

The acquisition module 32 is coupled to the determination module 31 and configured to acquire a real-time load at a current moment and a historical predicted load corresponding to a previous moment, where the historical predicted load represents a load migration change of the current moment predicted at the previous moment.

The receiving module 33 is coupled to the acquisition module 32 and configured to receive cross-layer neighbor cell load data respectively transferred from a left neighbor cell same-direction group and a right neighbor cell same-direction group of the cross-layer same-direction group, where the corresponding cross-layer neighbor cell load data includes historical load data and real-time load data, the historical load data represents a predicted load at the previous moment corresponding to K layers of primary neighbor cells of a corresponding neighbor cell same-direction group, and the real-time load data represents an actual load at the current moment of the K layers of primary neighbor cells of the corresponding neighbor cell same-direction group.

The prediction module 34 is coupled to the receiving module 33 and configured to perform load prediction with a preset load prediction model and based on the real-time load, the historical predicted load and the cross-layer neighbor cell load data, to obtain a forward predicted load and a reverse predicted load corresponding to the target base station cell, and determine a corresponding load prediction result based on the forward predicted load and the reverse predicted load.

According to the dynamic load prediction apparatus provided in the embodiment of the present disclosure, by determining, in a plurality of base station cells located on a preset load migration line, a cross-layer same-direction group, where a base station cell at each end of the cross-layer same-direction group is a primary neighbor cell of a $K^{th}$ layer corresponding to the target base station cell, and K is a preset value; acquiring a real-time load at a current moment and a historical predicted load corresponding to a previous moment, where the historical predicted load represents a load migration change of the current moment predicted at the previous moment; receiving cross-layer neighbor cell load data respectively transferred from a left neighbor cell same-direction group and a right neighbor cell same-direction group of the cross-layer same-direction group, where the corresponding cross-layer neighbor cell load data includes historical load data and real-time load data, the historical load data represents a predicted load at the previous moment corresponding to K layers of primary neighbor cells of a corresponding neighbor cell same-direction group, and the real-time load data represents an actual load at the current moment of the K layers of primary neighbor cells of the corresponding neighbor cell same-direction group; performing load prediction with a preset load prediction model and based on the real-time load, the historical predicted load and the cross-layer neighbor cell load data, to obtain a forward predicted load and a reverse predicted load corresponding to the target base station cell, and determining a corresponding load prediction result based on the forward predicted load and the reverse predicted load, the problem that the load prediction methods in the related art cannot be applied to a high-speed mobile communication scene with high-speed user movement, load burst and no accurate temporal or periodic rule is solved, and the following beneficial effects are achieved: the base station cell can detect and sense the user load and change trend of a farther neighbor cell in advance at a precise time point; and, by combining the predicted load and the actual load of the base station cell, effective reference and guidance can be provided for energy conservation, load control, traffic guarantee and other operations of the base station cell.

In some embodiments, the prediction module 34 is further configured to perform, by the load prediction model, forward load calculation on the real-time load, the historical predicted load and the historical load data and real-time load data corresponding to the left neighbor cell same-direction group, to obtain the forward predicted load; and perform, by the load prediction model, reverse load calculation on the real-time load, the historical predicted load and the historical load data and real-time load data corresponding to the right neighbor cell same-direction group, to obtain the reverse predicted load.

In some embodiments, the apparatus is further configured to acquire a first actual load of each base station cell on the preset load migration line at the current moment. determine a nearest left neighbor cell and a nearest right neighbor cell corresponding to each base station cell, and respectively acquire actual loads of the nearest right neighbor cell and the nearest left neighbor cell corresponding to the base station cell at the previous moment, where by defining a direction from a left end to a right end of the preset load migration line as a forward direction, the nearest left neighbor cell represents a first base station cell on a left side of a corresponding base station cell in the forward direction, and the nearest right neighbor cell represents a first base station cell on a right side of a corresponding base station cell in the forward direction; determine, based on the actual load of the nearest right neighbor cell at the previous moment, a first migration load of the nearest right neighbor cell which is migrated to the base station cell according to a first preset proportion at the previous moment, and determine, based on the actual load of the nearest left neighbor cell at the previous moment, a second migration load of the nearest left neighbor cell which is migrated to the base station cell according to a second preset proportion at the previous moment; and determine, according to a difference between the first actual load and the first migration load, the real-time load corresponding to the base station cell under forward prediction at the current moment, and determine, according to a difference between the first actual load and the second migration load, the real-time load corresponding to the base station cell under reverse prediction at the current moment.

In some embodiments, the load prediction model includes a forward predicted load calculation equation $\hat{L}_{p\rightarrow}^{i}(m)$ and a reverse predicted load calculation equation $\hat{L}_{p\leftarrow}^{i}(m)$:

$$\hat{L}^i_{p\rightarrow}(m) = \alpha * \left\{ \beta * [L^i(m) - \gamma * L^{i+1}_{p\leftarrow}(m-1)] + (1-\beta) * \hat{L}^i_{p\rightarrow}(m-1) \right\} + (1-\alpha)$$

$$* \left\{ \sum_{j=i+1}^{i+K} \left[ \beta^{j-i} * \left( L^j_{p\rightarrow}(m) - \gamma * L^{j+1}_{p\leftarrow}(m-1) \right) \right] + \sum_{j=i+1}^{i+K} \left[ (1-\beta)^{j-i} * \hat{L}^j_{p\rightarrow}(m-1) \right] \right\}$$

$$\hat{L}^i_{p\leftarrow}(m) = \alpha * \left\{ \beta * [L^i(m) - (1-\gamma) * L^{i+1}_{p\rightarrow}(m-1)] + (1-\beta) * \hat{L}^i_{p\leftarrow}(m-1) \right\} + (1-\alpha)$$

$$* \left\{ \sum_{j=i+1}^{i+K} \left[ \beta^{j-i} * \left( L^j_{p\leftarrow}(m) - (1-\gamma) * L^{j+1}_{p\rightarrow}(m-1) \right) \right] + \sum_{j=i+1}^{i+K} \left[ (1-\beta)^{j-i} * \hat{L}^j_{p\leftarrow}(m-1) \right] \right\}$$

where m represents the current moment, m-1 represents the previous moment, $\rightarrow$ represents the forward direction, $\leftarrow$ represents a reverse direction, K represents the number of layers of the cross-layer same-direction group, p is a serial number of one of P cross-layer same-direction groups corresponding to the target base station cell $C_i$, $L^i(m)$ is an actual load of the target base station cell $C_i$ at the current moment, $\hat{L}^i_{p\rightarrow}(m)$ and $\hat{L}^i_{p\rightarrow}(m-1)$ represents forward predicted loads of the target base station cell $C_i$ at the current moment and at the previous moment, respectively, $L^{i+1}_{p\leftarrow}(m-1)$ is an actual load of a primary neighbor cell $C^{i+1}_{p\leftarrow}$ of a first layer in the right neighbor cell same-direction group corresponding to the target base station cell $C_i$ at the previous moment, $\gamma$ is the first preset proportion, $L^j_{p\rightarrow}(m)$ is an actual load of a primary neighbor cell $C^j_{p\rightarrow}$ of an (j-i)$^{th}$ layer in the left neighbor cell same-direction group at the current moment, $L^{j+1}_{p\leftarrow}(m-1)$ is an actual load of the nearest right neighbor cell $C^{j+1}_{p\leftarrow}$ corresponding to the primary neighbor cell $C^j_{p\rightarrow}$ of the (j-i)$^{th}$ layer in the left neighbor cell same-direction group at the previous moment, $\hat{L}^j_{p\rightarrow}(m-1)$ is a forward predicted load of the primary neighbor cell $C^j_{p\rightarrow}$ of the (j-i)$^{th}$ layer in the left neighbor cell same-direction group at the previous moment, $\hat{L}^i_{p\leftarrow}(m)$ and $\hat{L}^i_{p\leftarrow}(m-1)$ represents reverse predicted loads of the target base station cell $C_i$ at the current moment and at the previous moment, respectively, $L^{i+1}_{p\rightarrow}(m-1)$ is an actual load of a primary neighbor cell $C^{i+1}_{p\rightarrow}$ of a first layer in the left neighbor cell same-direction group corresponding to the target base station cell $C_i$ at the previous moment, $L^j_{p\leftarrow}(m)$ is an actual load of a primary neighbor cell $C^j_{p\leftarrow}$ of an (j-i)$^{th}$ layer in the right neighbor cell same-direction group at the current moment, $L^{j+1}_{p\rightarrow}(m-1)$ is an actual load the nearest left neighbor cell $C^{j+1}_{p\rightarrow}$ corresponding to the primary neighbor cell $C^j_{p\leftarrow}$ of the (j-i)$^{th}$ layer in the right neighbor cell same-direction group at the previous moment, $\hat{L}^j_{p\leftarrow}(m-1)$ is a reverse predicted load of the primary neighbor cell $C^j_{p\leftarrow}$ of the (j-i)$^{th}$ layer in the right neighbor cell same-direction group at the previous moment; $\alpha$, $\beta$ and $\gamma$ are weight factors between [0, 1], $\alpha$ is a weight of a load of the target base station cell $C_i$ itself, (1-$\alpha$) is a weight of a load corresponding to a neighbor cell same-direction group, $\beta$ is a weight of a real-time load of each base station cell, (1-$\beta$) is a weight of a predicted load of each base station cell, $\gamma$ is the first preset proportion, and (1-$\gamma$) is the second preset proportion.

In some embodiments, the prediction module 34 is further configured to sum the forward predicted load and the reverse predicted load to obtain a first predicted total load corresponding to the target base station on the preset load migration line; and accumulate first predicted total loads corresponding to a plurality of preset load migration lines to generate a total predicted load, where the load prediction result includes the total predicted load.

In some embodiments, after determining the corresponding load prediction result, the apparatus is further configured to respectively acquire the total predicted load corresponding to the current moment and an actual load corresponding to the current moment, and respectively acquire a historical total predicted load corresponding to the previous moment and a historical actual load corresponding to the previous moment; generate a difference variation function of load prediction based on at least two of the actual load corresponding to the current moment, the total predicted load corresponding to the current moment, the historical total predicted load corresponding to the previous moment and the historical actual load corresponding to the previous moment, and determine a calculated value of the difference variation function, where the difference variation function represents prediction performance of load prediction; and judge whether the calculated value of the difference variation function is greater than a preset threshold, and adjust weight factors corresponding to the load prediction model according to a judgment result, where the weight factors corresponding to the load prediction model includes the weight $\alpha$ of the load of the target base station cell $C_i$ itself, the weight $\beta$ of the actual load of each base station cell, and the first preset proportion $\gamma$.

In some embodiments, the difference variation function includes one of: a difference between the actual load corresponding to the current moment and the historical total predicted load corresponding to the previous moment; a ratio of the difference between the actual load corresponding to the current moment and the historical total predicted load corresponding to the previous moment to the actual load corresponding to the current moment; a difference between the historical total predicted load corresponding to the previous moment and the total predicted load corresponding to the current moment; a difference between the actual load corresponding to the current moment and the historical actual load corresponding to the previous moment; or a load difference generated by weighting the difference between the total predicted load corresponding to the current moment and the historical total predicted load corresponding to the previous moment, and weighting the difference between the actual load corresponding to the current moment and the historical actual load corresponding to the previous moment.

In some embodiments, the acquisition module 31 is further configured to acquire granularity data of switching frequency corresponding to each base station cell on the preset load migration line, and select a neighbor cell with the largest granularity data of switching frequency as a primary neighbor cell of the base station cell, where the granularity data of switching frequency represents the number of user switches between the base station cell and a neighbor cell corresponding to the base station cell within a preset time period; take a selected left primary neighbor cell and a selected right primary neighbor cell corresponding to each base station cell as a base station cell same-direction group corresponding to the base station cell; and take the target base station cell as a start point, select K continuous base station cells corresponding to the base station cell same-direction groups in both forward and reverse directions of the preset load migration line, and perform de-duplication on the selected base station cells in the base station cell same-direction groups to obtain the cross-layer same-direction group.

FIG. 4 is a schematic structural diagram of a base station according to an embodiment of the present disclosure. As shown in FIG. 4, an embodiment of the present disclosure provides a base station including a processor 41, a communication interface 42, a memory 43, and a communication bus 44. The processor 41, the communication interface 42 and the memory 43 are communicated with each other through the communication bus 44. The memory 43 has a computer program stored thereon. The processor 41 is configured to, when executing the program stored on the memory 43, implement the method as shown in FIG. 1.

The processing in the base station implements the method steps in FIG. 1, and the technical effects brought by the processing in the base station are consistent with the technical effects of the dynamic load prediction method in FIG. 1 executed in the foregoing embodiments, and thus are not repeated here.

The communication bus mentioned in the base station may be a peripheral component interconnect (PCI) bus or an extended industry standard architecture (EISA) bus or the like. The communication bus may be divided into an address bus, a data bus, a control bus, or the like. For ease of illustration, only one thick line is shown in FIG. 4, but it does not indicate only one bus or one bus type.

The communications interface is configured for mutual communication of the terminal and other devices.

The memory may include a random access memory (RAM), or a non-volatile memory, such as at least one disk memory. Optionally, the memory may be at least one memory device located remotely from the processor.

The processor may be a general purpose processor, including a central processing unit (CPU), a network processor (NP), or the like; or may be a digital signal processor (DSP), an application specific integrated circuit (ASIC), a field-programmable gate array (FPGA) or any other programmable logic device, a discrete gate or a transistor logic device, or a discrete hardware component.

An embodiment of the present disclosure further provides a computer-readable storage medium storing a computer program thereon, where the computer program, when executed by a processor, causes the dynamic load prediction method according to any one of the method embodiments described above to be implemented.

In yet another embodiment of the present disclosure, there is further provided a computer program product including instructions which, when executed on a computer, cause the computer to implement the dynamic load prediction method according to any one of the above embodiments.

Compared with the related art, the embodiments of the present disclosure provide a dynamic load prediction method and apparatus, a base station and a storage medium which, by determining, in a plurality of base station cells located on a preset load migration line, a cross-layer same-direction group, where a base station cell at each end of the cross-layer same-direction group is a primary neighbor cell of a K$^{th}$ layer corresponding to the target base station cell, and K is a preset value; acquiring a real-time load at a current moment and a historical predicted load corresponding to a previous moment, where the historical predicted load represents a load migration change of the current moment predicted at the previous moment; receiving cross-layer neighbor cell load data respectively transferred from a left neighbor cell same-direction group and a right neighbor cell same-direction group of the cross-layer same-direction group, where the corresponding cross-layer neighbor cell load data includes historical load data and real-time load data, the historical load data represents a predicted load at the previous moment corresponding to K layers of primary neighbor cells of a corresponding neighbor cell same-direction group, and the real-time load data represents an actual load at the current moment of the K layers of primary neighbor cells of the corresponding neighbor cell same-direction group; performing load prediction with a preset load prediction model and based on the real-time load, the historical predicted load and the cross-layer neighbor cell load data, to obtain a forward predicted load and a reverse predicted load corresponding to the target base station cell, and determining a corresponding load prediction result based on the forward predicted load and the reverse predicted load, solve the problem that the load prediction methods in the related art cannot be applied to a high-speed mobile communication scene with high-speed user movement, load burst and no accurate temporal or periodic rule is solved, and the following beneficial effects are achieved: the base station cell can detect and sense the user load and change trend of a farther neighbor cell in advance at a precise time point; and, by combining the predicted load and the actual load of the base station cell, effective reference and guidance can be provided for energy conservation, load control, traffic guarantee and other operations of the base station cell.

It should be noted that, in the present disclosure, relational terms such as "first" or "second" and the like, are used merely for distinguishing one entity or operation from another without necessarily requiring or implying that there is any such actual relationship or order between such entities or operations. Moreover, the term "include," "comprise" or any variant thereof means to be non-exclusive so that a process, method, item or device including a series of elements includes not only said elements, but also other elements not explicitly listed, or inherent elements of such processes, methods, items or devices. **In** the absence of more limitations, an element defined by "including a..." does not exclude the existence of additional identical elements in the process, method, item or device including the element.

The above description is given merely for the purpose of describing specific implementations of the present disclosure, so as to enable those skilled in the art to understand or implement the present disclosure. Various modifications to these embodiments will be readily apparent to those skilled in the art, and the general principles defined herein may be applied to other embodiments without departing from the spirit or scope of the present disclosure. Therefore, the present disclosure is not intended to be limited to the embodiments shown herein, but is to be accorded the widest scope consistent with the principles and novel features disclosed herein.

**Claims**

1.  A dynamic load prediction method applied to a target base station cell under a high-speed private network, comprising:

    determining, in a plurality of base station cells located on a preset load migration line, a cross-layer same-direction group, wherein a base station cell at each end of the cross-layer same-direction group is a primary neighbor cell of a K$^{th}$ layer corresponding to the target base station cell, and K is a preset value;
    acquiring a real-time load at a current moment and a historical predicted load corresponding to a previous moment, wherein the historical predicted load represents a load migration change of the current moment predicted at the previous moment;
    receiving cross-layer neighbor cell load data respectively transferred from a left neighbor cell same-direction group and a right neighbor cell same-direction group of the cross-layer same-direction group, wherein the corresponding cross-layer neighbor cell load data comprises historical load data and real-time load data, the historical load data represents a predicted load at the previous moment corresponding to K layers of primary neighbor cells of a corresponding neighbor cell same-direction group, and the real-time load data represents an actual load at the current moment of the K layers of primary neighbor cells of the corresponding neighbor cell same-direction group; and
    performing load prediction with a preset load prediction model and based on the real-time load, the historical predicted load and the cross-layer neighbor cell load data, to obtain a forward predicted load and a reverse predicted load corresponding to the target base station cell, and determining a corresponding load prediction result based on the forward predicted load and the reverse predicted load.

2. The method according to claim 1, wherein performing load prediction with the preset load prediction model and based on the real-time load, the historical predicted load and the cross-layer neighbor cell load data, to obtain the forward predicted load and the reverse predicted load corresponding to the target base station cell comprises:

performing, by the load prediction model, forward load calculation on the real-time load, the historical predicted load and the historical load data and real-time load data corresponding to the left neighbor cell same-direction group, to obtain the forward predicted load; and

performing, by the load prediction model, reverse load calculation on the real-time load, the historical predicted load and the historical load data and real-time load data corresponding to the right neighbor cell same-direction group, to obtain the reverse predicted load.

3. The method according to claim 2, wherein the method further comprises:

acquiring a first actual load of each base station cell on the preset load migration line at the current moment;

determining a nearest left neighbor cell and a nearest right neighbor cell corresponding to each base station cell, and respectively acquiring actual loads of the nearest right neighbor cell and the nearest left neighbor cell corresponding to the base station cell at the previous moment, wherein by defining a direction from a left end to a right end of the preset load migration line as a forward direction, the nearest left neighbor cell represents a first base station cell on a left side of a corresponding base station cell in the forward direction, and the nearest right neighbor cell represents a first base station cell on a right side of a corresponding base station cell in the forward direction;

determining, based on the actual load of the nearest right neighbor cell at the previous moment, a first migration load of the nearest right neighbor cell which is migrated to the base station cell according to a first preset proportion at the previous moment, and determining, based on the actual load of the nearest left neighbor cell at the previous moment, a second migration load of the nearest left neighbor cell which is migrated to the base station cell according to a second preset proportion at the previous moment; and

determining, according to a difference between the first actual load and the first migration load, the real-time load corresponding to the base station cell under forward prediction at the current moment, and determining, according to a difference between the first actual load and the second migration load, the real-time load corresponding to the base station cell under reverse prediction at the current moment.

4. The method according to claim 3, wherein the load prediction model comprises a forward predicted load calculation equation $\hat{L}^i_{p\rightarrow}(m)$ and a reverse predicted load calculation equation $\hat{L}^i_{p\leftarrow}(m)$ :

$$\hat{L}^i_{p\rightarrow}(m) = \alpha*\left\{\beta*[L^i(m)-\gamma*L^{i+1}_{p\leftarrow}(m-1)]+(1-\beta)*\hat{L}^i_{p\rightarrow}(m-1)\right\}+(1-\alpha)$$

$$*\left\{\sum_{j=i+1}^{i+K}\left[\beta^{j-i}*\left(L^j_{p\rightarrow}(m)-\gamma*L^{j+1}_{p\leftarrow}(m-1)\right)\right]+\sum_{j=i+1}^{i+K}\left[(1-\beta)^{j-i}*\hat{L}^j_{p\rightarrow}(m-1)\right]\right\}$$

$$\hat{L}^i_{p\leftarrow}(m) = \alpha*\left\{\beta*[L^i(m)-(1-\gamma)*L^{i+1}_{p\rightarrow}(m-1)]+(1-\beta)*\hat{L}^i_{p\leftarrow}(m-1)\right\}+(1-\alpha)$$

$$*\left\{\sum_{j=i+1}^{i+K}\left[\beta^{j-i}*\left(L^j_{p\leftarrow}(m)-(1-\gamma)*L^{j+1}_{p\rightarrow}(m-1)\right)\right]+\sum_{j=i+1}^{i+K}\left[(1-\beta)^{j-i}*\hat{L}^j_{p\leftarrow}(m-1)\right]\right\}$$

where m represents the current moment, m-1 represents the previous moment, $\rightarrow$ represents the forward direction, $\leftarrow$ represents a reverse direction, K represents the number of layers of the cross-layer same-direction group, p is a serial number of one of P cross-layer same-direction groups corresponding to the target base station cell $C_i$, $L^i(m)$ is an actual load of the target base station cell $C_i$ at the current moment, $\hat{L}^i_{p\rightarrow}(m)$ and $\hat{L}^i_{p\rightarrow}(m-1)$ represents forward predicted loads of the target base station cell $C_i$ at the current moment and at the previous moment, respectively,

$L_{p\leftarrow}^{i+1}(m-1)$ is an actual load of a primary neighbor cell $C_{p\leftarrow}^{i+1}$ of a first layer in the right neighbor cell same-direction group corresponding to the target base station cell $C_i$ at the previous moment, $\gamma$ is the first preset proportion, $L_{p\rightarrow}^{j}(m)$ is an actual load of a primary neighbor cell $C_{p\rightarrow}^{j}$ of an (j-i)$^{th}$ layer in the left neighbor cell same-direction group at the current moment, $L_{p\leftarrow}^{j+1}(m-1)$ is an actual load of the nearest right neighbor cell $C_{p\leftarrow}^{j+1}$ corresponding to the primary neighbor cell $C_{p\rightarrow}^{j}$ of the (j-i)$^{th}$ layer in the left neighbor cell same-direction group at the previous moment, $\hat{L}_{p\rightarrow}^{j}(m-1)$ is a forward predicted load of the primary neighbor cell $C_{p\rightarrow}^{j}$ of the (j-i)$^{th}$ layer in the left neighbor cell same-direction group at the previous moment, $\hat{L}_{p\leftarrow}^{i}(m)$ and $\hat{L}_{p\leftarrow}^{i}(m-1)$ represents reverse predicted loads of the target base station cell $C_i$ at the current moment and at the previous moment, respectively, $L_{p\rightarrow}^{i+1}(m-1)$ is an actual load of a primary neighbor cell $C_{p\rightarrow}^{i+1}$ of a first layer in the left neighbor cell same-direction group corresponding to the target base station cell $C_i$ at the previous moment, $L_{p\leftarrow}^{j}(m)$ is an actual load of a primary neighbor cell $C_{p\leftarrow}^{j}$ of an (j-i)$^{th}$ layer in the right neighbor cell same-direction group at the current moment, $L_{p\rightarrow}^{j+1}(m-1)$ is an actual load the nearest left neighbor cell $C_{p\rightarrow}^{j+1}$ corresponding to the primary neighbor cell $C_{p\leftarrow}^{j}$ of the (j-i)$^{th}$ layer in the right neighbor cell same-direction group at the previous moment, $\hat{L}_{p\leftarrow}^{j}(m-1)$ is a reverse predicted load of the primary neighbor cell $C_{p\leftarrow}^{j}$ of the (j-i)$^{th}$ layer in the right neighbor cell same-direction group at the previous moment; $\alpha$, $\beta$ and $\gamma$ are weight factors between [0, 1], $\alpha$ is a weight of a load of the target base station cell $C_i$ itself, (1-$\alpha$) is a weight of a load corresponding to a neighbor cell same-direction group, $\beta$ is a weight of a real-time load of each base station cell, (1-$\beta$) is a weight of a predicted load of each base station cell, $\gamma$ is the first preset proportion, and (1-$\gamma$) is the second preset proportion.

5. The method according to claim 4, wherein determining the corresponding load prediction result based on the forward predicted load and the reverse predicted load comprises:

   summing the forward predicted load and the reverse predicted load to obtain a first predicted total load corresponding to the target base station on the preset load migration line; and
   accumulating first predicted total loads corresponding to a plurality of preset load migration lines to generate a total predicted load, wherein the load prediction result comprises the total predicted load.

6. The method according to claim 5, wherein after determining the corresponding load prediction result, the method further comprises:

   respectively acquiring the total predicted load corresponding to the current moment and an actual load corresponding to the current moment, and respectively acquiring a historical total predicted load corresponding to the previous moment and a historical actual load corresponding to the previous moment;
   generating a difference variation function of load prediction based on at least two of the actual load corresponding to the current moment, the total predicted load corresponding to the current moment, the historical total predicted load corresponding to the previous moment and the historical actual load corresponding to the previous moment, and determining a calculated value of the difference variation function, wherein the difference variation function represents prediction performance of load prediction; and
   judging whether the calculated value of the difference variation function is greater than a preset threshold, and adjusting weight factors corresponding to the load prediction model according to a judgment result, wherein the weight factors corresponding to the load prediction model comprise the weight $\alpha$ of the load of the target base

station cell $C_i$ itself, the weight $\beta$ of the actual load of each base station cell, and the first preset proportion $\gamma$.

7. The method according to claim 6, wherein the difference variation function comprises one of:

a difference between the actual load corresponding to the current moment and the historical total predicted load corresponding to the previous moment,
a ratio of the difference between the actual load corresponding to the current moment and the historical total predicted load corresponding to the previous moment to the actual load corresponding to the current moment,
a difference between the historical total predicted load corresponding to the previous moment and the total predicted load corresponding to the current moment,
a difference between the actual load corresponding to the current moment and the historical actual load corresponding to the previous moment, or
a load difference generated by weighting the difference between the total predicted load corresponding to the current moment and the historical total predicted load corresponding to the previous moment, and weighting the difference between the actual load corresponding to the current moment and the historical actual load corresponding to the previous moment.

8. The method of claim 6, further comprising:

calculating a gravity center of total load CoL(m, p) of a preset high-speed private network segment by:

$$\mathrm{CoL}\left(m,\,p\right)=\frac{\sum_{j=i-K}^{i+K}\left[(j\text{-}i)*L_p^j\left(m\right)\right]}{\sum_{j=i-K}^{i+K}\left[L_p^j\left(m\right)\right]}$$

wherein the high-speed private network segment consists of the target base station cell $C_i$ and 2K layers of primary neighbor cells of the same-direction group crossing K layers corresponding to the target base station cell $C_i$, CoL(m, p) represents the gravity center of total load of the high-speed private network segment corresponding to the target base station cell $C_i$ at a moment m, $L_p^j\left(m\right)$ represents an actual load of each base station cell $C_j$ in the high-speed private network segment at the moment m, and p is a serial number of one of P cross-layer same-direction groups corresponding to the target base station cell $C_i$; and
determining that the difference variation function comprises the gravity center of total load.

9. The method according to claim 3, wherein receiving cross-layer neighbor cell load data respectively transferred from the left neighbor cell same-direction group and the right neighbor cell same-direction group of the cross-layer same-direction group comprises:

after the nearest left neighbor cell detects first target load data from received first neighbor cell group load data, synthesizing, by the nearest left neighbor cell, the first target load data, the actual load of the nearest left neighbor cell at the current moment, and the historical predicted load of the nearest left neighbor cell at the previous moment into first cross-layer neighbor cell load data according to a preset format, and transferring, by the nearest left neighbor cell, the first cross-layer neighbor cell load data to the corresponding target base station cell, wherein the first neighbor cell group load data comprises cross-layer neighbor cell load data corresponding to a left neighbor cell same-direction group of the nearest left neighbor cell, and the first target load data comprises cross-layer neighbor cell load data corresponding to all primary neighbor cells excluding the primary neighbor cell of the $K^{th}$ layer in the left neighbor cell same-direction group of the nearest left neighbor cell; and
after the nearest right neighbor cell detects second target load data from received second neighbor cell group load data, synthesizing, by the nearest right neighbor cell, the second target load data, the actual load of the nearest right neighbor cell at the current moment, and the historical predicted load of the nearest right neighbor cell at the previous moment into second cross-layer neighbor cell load data according to a preset format, and transferring, by the nearest right neighbor cell, the second cross-layer neighbor cell load data to the corresponding target base station cell, wherein the second neighbor cell group load data comprises cross-layer neighbor cell load data corresponding to a right neighbor cell same-direction group of the nearest right neighbor cell, and the second target load data comprises cross-layer neighbor cell load data corresponding to all primary neighbor cells excluding the primary neighbor cell of the $K^{th}$ layer in the right neighbor cell same-direction group of the nearest right neighbor cell.

10. The method according to claim 1, wherein determining, in the plurality of base station cells located on the preset load migration line, the cross-layer same-direction group comprises:

acquiring granularity data of switching frequency corresponding to each base station cell on the preset load migration line, and selecting a neighbor cell with the largest granularity data of switching frequency as a primary neighbor cell of the base station cell, wherein the granularity data of switching frequency represents the number of user switches between the base station cell and a neighbor cell corresponding to the base station cell within a preset time period;

taking a selected left primary neighbor cell and a selected right primary neighbor cell corresponding to each base station cell as a base station cell same-direction group corresponding to the base station cell; and

taking the target base station cell as a start point, selecting K continuous base station cells corresponding to the base station cell same-direction groups in both forward and reverse directions of the preset load migration line, respectively, and performing de-duplication on the selected base station cells in the base station cell same-direction groups to obtain the cross-layer same-direction group.

11. A dynamic load prediction apparatus applied to a target base station cell under a high-speed private network, comprising:

a determination module configured to determine, in a plurality of base station cells located on a preset load migration line, a cross-layer same-direction group, wherein a base station cell at each end of the cross-layer same-direction group is a primary neighbor cell of a $K^{th}$ layer corresponding to the target base station cell, and K is a preset value;

an acquisition module configured to acquire a real-time load at a current moment and a historical predicted load corresponding to a previous moment, wherein the historical predicted load represents a load migration change of the current moment predicted at the previous moment;

a receiving module configured to receive cross-layer neighbor cell load data respectively transferred from a left neighbor cell same-direction group and a right neighbor cell same-direction group of the cross-layer same-direction group, wherein the corresponding cross-layer neighbor cell load data comprises historical load data and real-time load data, the historical load data represents a predicted load at the previous moment corresponding to K layers of primary neighbor cells of a corresponding neighbor cell same-direction group, and the real-time load data represents an actual load at the current moment of the K layers of primary neighbor cells of the corresponding neighbor cell same-direction group; and

a prediction module configured to perform load prediction with a preset load prediction model and based on the real-time load, the historical predicted load and the cross-layer neighbor cell load data, to obtain a forward predicted load and a reverse predicted load corresponding to the target base station cell, and determine a corresponding load prediction result based on the forward predicted load and the reverse predicted load.

12. A base station, comprising a processor, a communication interface, a memory, and a communication bus, wherein the processor, the communication interface and the memory are communicated with each other through the communication bus;

the memory has a computer program stored thereon; and

the processor is configured to, when executing the program stored on the memory, implement the dynamic load prediction method according to any one of claims 1 to 10.

13. A computer-readable storage medium having a computer program stored thereon, wherein the computer program, when executed by a processor, causes the dynamic load prediction method according to any one of claims 1 to 10 to be implemented.

| Determine, in a plurality of base station cells located on a preset load migration line, a cross-layer same-direction group, wherein a base station cell at each end of the cross-layer same-direction group is a primary neighbor cell of a $K^{th}$ layer corresponding to the target base station cell, and K is a preset value | S101 |

| Acquire a real-time load at a current moment and a historical predicted load corresponding to a previous moment, wherein the historical predicted load represents a load migration change of the current moment predicted at the previous moment | S102 |

| Receive cross-layer neighbor cell load data respectively transferred from a left neighbor cell same-direction group and a right neighbor cell same-direction group of the cross-layer same-direction group, wherein the corresponding cross-layer neighbor cell load data includes historical load data and real-time load data, the historical load data represents a predicted load at the previous moment corresponding to K layers of primary neighbor cells of a corresponding neighbor cell same-direction group, and the real-time load data represents an actual load at the current moment of the K layers of primary neighbor cells of the corresponding neighbor cell same-direction group | S103 |

| Perform load prediction with a preset load prediction model and based on the real-time load, the historical predicted load and the cross-layer neighbor cell load data, to obtain a forward predicted load and a reverse predicted load corresponding to the target base station cell, and determine a corresponding load prediction result based on the forward predicted load and the reverse predicted load | S104 |

FIG. 1

| left neighbor cell of the 6th layer | left neighbor cell of the 5th layer | left neighbor cell of the 4th layer | left neighbor cell of the 3rd layer | left neighbor cell of the 2nd layer | left neighbor cell of the 1st layer | Target BS Cell | right neighbor cell of the 1st layer | right neighbor cell of the 2nd layer | right neighbor cell of the 3rd layer | right neighbor cell of the 4th layer | right neighbor cell of the 5th layer | right neighbor cell of the 6th layer |
|---|---|---|---|---|---|---|---|---|---|---|---|---|
| C1 | C2 | C3 | C4 | C5 | C6 | C7 | C8 | C9 | C10 | C11 | C12 | C13 |

FIG.2

31   32   33   34

| Determination Module | Acquisition Module | Receiving Module | Prediction Module |

FIG.3

Processor   41

44

Memory   43

Communication Interface   42

FIG.4

## INTERNATIONAL SEARCH REPORT

| International application No. |
| --- |
| **PCT/CN2023/083168** |

**A. CLASSIFICATION OF SUBJECT MATTER**

H04W24/06(2009.01)i

According to International Patent Classification (IPC) or to both national classification and IPC

**B. FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNKI, CNTXT, ENTXTC, DWPI, IEEE: 负荷, 预测, 基站, 线路, 同向, 正向, 逆向, 同方向, 反方向, 反向, 组, 层, 邻, 区, 历史, 当前, 时刻, Load, Predict+, Base Station, direction, Reverse, Group, Layer, Neighbor, Region, Historical, Current, Time

**C. DOCUMENTS CONSIDERED TO BE RELEVANT**

| Category* | Citation of document, with indication, where appropriate, of the relevant passages | Relevant to claim No. |
| --- | --- | --- |
| A | CN 113132945 A (CHINA MOBILE GROUP LIAONING CO., LTD. et al.) 16 July 2021 (2021-07-16)<br>description, paragraphs [0004]-[0019] | 1-13 |
| A | CN 112954707 A (CHINA TELECOM CORPORATION LIMITED) 11 June 2021 (2021-06-11)<br>entire document | 1-13 |
| A | CN 113891415 A (TIBET XIANFENG LVNENG ENVIRONMENTAL PROTECTION TECHNOLOGY CO., LTD.) 04 January 2022 (2022-01-04)<br>entire document | 1-13 |
| A | JP 2014161131 A (HITACHI, LTD.) 04 September 2014 (2014-09-04)<br>entire document | 1-13 |
| A | 汪勇刚 等(WANG, Yonggang et al.). "多业务CDMA系统中的反向负荷预测 (Prediction of Reverse Traffic Load in Multiple Services Cdma Systems)"<br>电子与信息学报 (Journal of Electronics & Information Technology),<br>Vol. 25, No. 02, 28 February 2003 (2003-02-28), 152-157<br>entire document | 1-13 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 May 2023** | **17 May 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/083168**

| Patent document cited in search report | | | Publication date (day/month/year) | Patent family member(s) | Publication date (day/month/year) |
|---|---|---|---|---|---|
| CN | 113132945 | A | 16 July 2021 | None | |
| CN | 112954707 | A | 11 June 2021 | None | |
| CN | 113891415 | A | 04 January 2022 | None | |
| JP | 2014161131 | A | 04 September 2014 | None | |

Form PCT/ISA/210 (patent family annex) (July 2022)

**REFERENCES CITED IN THE DESCRIPTION**

**Patent documents cited in the description**

- CN 202211028169